(19) **Europäisches Patentamt / European Patent Office / Office européen des brevets**

(11) **EP 3 741 640 B1**

(12) **EUROPEAN PATENT SPECIFICATION**

(45) Date of publication and mention
of the grant of the patent:
**10.08.2022  Bulletin 2022/32**

(21) Application number: **18900958.2**

(22) Date of filing: **21.12.2018**

(51) International Patent Classification (IPC):
**B62D 15/02** (2006.01)  **B60T 8/1755** (2006.01)
**B60W 10/20** (2006.01)  **B60W 50/00** (2006.01)
**B60W 30/02** (2012.01)  **B60W 30/12** (2020.01)
**B62D 6/00** (2006.01)  **B60W 10/184** (2012.01)

(52) Cooperative Patent Classification (CPC):
**B60W 10/184; B60T 8/1755; B60W 10/20;**
**B60W 30/02; B60W 30/12; B60W 50/00;**
**B62D 6/003; B62D 15/025;** B60W 2050/0008;
B60W 2050/0012; B60W 2552/30

(86) International application number:
**PCT/JP2018/047349**

(87) International publication number:
**WO 2019/142607 (25.07.2019 Gazette 2019/30)**

(54) **DRIVING ASSISTANCE SYSTEM AND DRIVING ASSISTANCE METHOD**

FAHRASSISTENZSYSTEM UND FAHRASSISTENZVERFAHREN

SYSTÈME D'AIDE À LA CONDUITE ET PROCÉDÉ D'AIDE À LA CONDUITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **19.01.2018   JP 2018007488**

(43) Date of publication of application:
**25.11.2020   Bulletin 2020/48**

(73) Proprietor: **Hitachi Astemo, Ltd.
Hitachinaka-shi, Ibaraki 312-8503 (JP)**

(72) Inventor: **KASHIWAMURA, Satoshi
Hitachinaka-shi, Ibaraki 312-8503 (JP)**

(74) Representative: **Hoefer & Partner Patentanwälte
mbB
Pilgersheimer Straße 20
81543 München (DE)**

(56) References cited:
**EP-A1- 1 674 359      EP-A1- 2 338 758
EP-A1- 3 738 850      JP-A- H 064 799
JP-A- 2006 206 032    JP-A- 2013 212 839**

**Description**

TECHNICAL FIELD

The present invention relates to a driver assistance system and to a driver assistance method, and more particularly, relates to a technique for controlling a vehicle in accordance with lane departure risk of the vehicle.

BACKGROUND ART

Patent Document 1 discloses a lane departure prevention device including a departure determination means and a braking/driving force control means. The departure determination means is configured to determine whether a host vehicle is about to depart from a lane on which the host vehicle travels. The braking/driving force control means is configured to, when the departure determination means determines that the host vehicle is about to depart from the lane, generate a yaw moment in a direction to avoid lane departure by applying braking force to the left wheels that is different from the braking force applied to the right wheels.

For example, when the vehicle is about to turn more outward than intended and depart from the lane, the lane departure prevention device according to Patent Document 1 performs braking/driving control to apply braking forces to the left wheels and the right wheels with an increased ratio of the braking force applied to the wheels on the inside of the turn.

Patent Document 2 discloses a lane departure prevention system. The lane departure prevention system comprises a position detector means for detecting positional information of a vehicle with respect to a lane of travel, a determining unit for comparing the positional information with a first threshold value indicating a predetermined positional relation with respect to the lane of travel, and determining a departure of the vehicle from the lane of travel on the basis of the comparison result, and a yaw moment applying unit for applying a yaw moment to the vehicle and switching a first process of applying the yaw moment to the vehicle only by steering wheels and a second process of applying the yaw moment to the vehicle by steering the wheels and applying a braking power to the wheels, on the basis of a traveling condition of the vehicle, when the determining unit determines that the vehicle departs from the lane of travel.

Patent Document 3 discloses a traveling aid device that comprises a detection unit for detecting the traveling state of a vehicle, the position of a lane marker, and the positions and types of obstacles around the vehicle; a calculation unit for calculating, based on the traveling state of the vehicle, the position of the lane marker, and the positions and types of the surrounding obstacles, a target yaw moment so as to prevent a departure from the lane marker and a collision with the surrounding obstacles; and a distribution unit for distributing, based on at least one of the traveling state of the vehicle, the position of the lane marker, and the positions and types of the surrounding obstacles, the target moment to a first actuator for controlling the driving/braking force and a second actuator for controlling the steering.

Patent Document 4, which is a document pursuant to Article 54(3) EPC, discloses a driver assistance device, a driver assistance method, and a driver assistance system according to the present invention make it possible to determine a distribution of a risk of a vehicle departing from a drivable width of a road on which the vehicle travels based on driving environment factors including a road curvature and a friction coefficient of a road surface of a curve approaching the vehicle; calculate an operation variable of an actuator related to a steering operation of the vehicle based on the distribution of the risk; and output the operation variable to the actuator.

REFERENCE DOCUMENT LIST

PATENT DOCUMENT

Patent Document 1:    JP 2006-193156 A

Patent Document 2:    EP 1 674 359 A1

Patent Document 3:    EP 2 338 758 A1

Patent Document 4:    EP 3 738 850 A1

## SUMMARY OF THE INVENTION

### PROBLEM TO BE SOLVED BY THE INVENTION

However, the lane departure prevention device disclosed in Patent Document 1 is configured to stabilize the vehicle by decelerating the vehicle in addition to controlling the turning force of the vehicle, and does not enable control that stabilizes the vehicle experiencing a sideslip and prevents lane departure of the vehicle in a compatible manner.

The present invention has been made in view of such conventional circumstances, and an object of the present invention is to provide a driver assistance system and a driver assistance method, each of which enables control that ensures stability of the vehicle and prevents lane departure of the vehicle in a compatible manner.

### MEANS FOR SOLVING THE PROBLEM

According to the present invention, there are provided driver assistance systems according to claims 1 and 4 and driver assistance methods according to claims 6 and 7.

### EFFECTS OF THE INVENTION

According to the present invention, it is possible to provide control that ensures stability of the vehicle and prevents lane departure of the vehicle in a compatible manner.

### BRIEF DESCRIPTION OF THE DRAWINGS

FIG. 1 is a block diagram of an implementation of a hardware configuration of a driver assistance system.
FIG. 2 is a functional block diagram of a driver assistance system.
FIG. 3 is a diagram for illustrating general characteristics of a risk map.
FIG. 4 is a flowchart of a procedure for calculating a target steering angle and a brake hydraulic pressure.
FIG. 5 is a flowchart of a procedure for calculating a front wheel lateral force.
FIG. 6 is a flowchart of a procedure for calculating a rear wheel lateral force.
FIG. 7 is a flowchart of a procedure for determining brake hydraulic pressures based on a braking moment $M_B$.
FIG. 8 is a flowchart of the procedure for determining the brake hydraulic pressures based on the braking moment $M_B$.
FIG. 9 is a schematic diagram of an example illustrating how the target steering variable is corrected in accordance with vehicle behavior and driving environment.
FIG. 10 is a functional block diagram of a departure risk calculation part.
FIG. 11 is a graph of a table for calculating a first adjustment gain $Gvc$ based on a vehicle speed Vc.
FIG. 12 is a graph of a table for calculating a second adjustment gain $G\mu$. based on a friction coefficient $\mu$.
FIG. 13 is a graph of a table for calculating a fourth adjustment gain $Gks$ based on a third adjustment gain $Gmax$ and a road curvature Ks.
FIG. 14 is a flowchart of a procedure for calculating a correction term $Uns$ according to an understeer/oversteer tendency of a vehicle.
FIG. 15 is a graph of a table for calculating the correction term $Uns$ based on the road curvature $Ks$ when the vehicle has an oversteer tendency.
FIG. 16 is a graph of a table for calculating the correction term $Uns$ based on the road curvature Ks when the vehicle has an understeer tendency.
FIG. 17 is a diagram showing an example for illustrating how the risk map transitions in accordance with the driving environment of the vehicle.
FIG. 18 is a functional block diagram of another example of the driver assistance system.

### MODE FOR CARRYING OUT THE INVENTION

Hereinafter, a driver assistance system and a driver assistance method according to the present invention will be described with reference to the drawings.

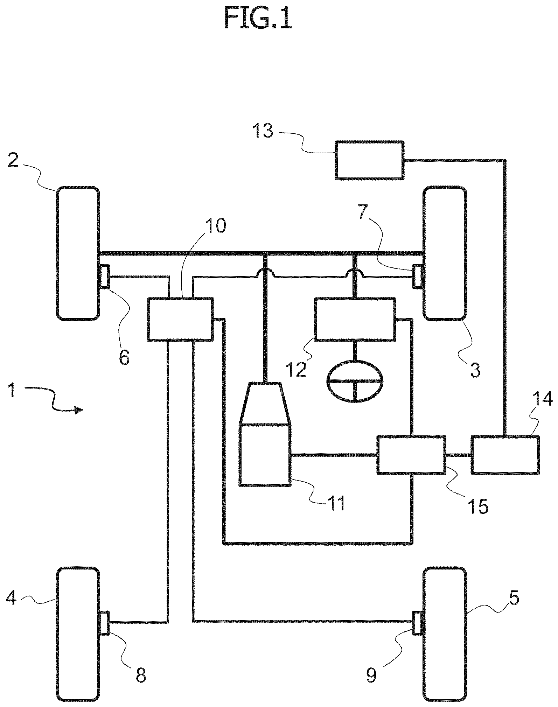

FIG. 1 is a block diagram of an implementation of a hardware configuration of a driver assistance system according to an embodiment of the present invention.

An implementation of a vehicle to which the technique according to this embodiment is applied includes, for example: a device configured to read information on a road ahead of the vehicle by using a camera and/or a global positioning system (GPS) together with map information; a steering device with an autonomous steering capability; and an anti-skid device configured to gather information for estimating a vehicle speed (i.e. travel speed) and driving conditions of the vehicle, a friction coefficient $\mu$ of a road surface on which the vehicle travels, and the like.

A vehicle 1 is a four-wheeled vehicle having a left front wheel 2, a right front wheel 3, a left rear wheel 4, and a right rear wheel 5. Wheels 2-5 are provided respectively with wheel cylinders 6-9 which constitute a brake device.

The hydraulic pressures of wheel cylinders 6-9 are adjusted by a wheel cylinder hydraulic pressure control device 10. A typical example of wheel cylinder hydraulic pressure control device 10 is an anti-skid device.

An engine 11 is an internal combustion engine configured such that torque output by engine 11 is electronically controlled, and may include an electronically controlled throttle.

A steering device 12, which has an automatic steering capability, includes a steering-related actuator. A typical example of steering device 12 is an electric power steering device which includes a motor for generating a steering assist force.

An external environment recognition control unit 13, which includes a microcomputer, is an external environment recognition part configured to process map information and image information obtained by a camera.

An action strategy controller 14, which serves as a first driver assistance control unit, includes a microcomputer and is configured to receive, through a communication line, the external environment information acquired by external environment recognition control unit 13.

The communication line is, for example, an on-vehicle network such as a controller area network (CAN).

Based on the received external environment information, action strategy controller 14 calculates road edge information, which at least partially constitutes road information, and a target trajectory of vehicle 1 (host vehicle), and the like, as well as a lane departure risk of vehicle 1, which is the risk that vehicle 1 may depart from the drivable width. Based on the calculation results, action strategy controller 14 outputs target trajectory-related information and lane departure risk-related information.

That is, action strategy controller 14 is a driver assistance device that has functions to serve as a target trajectory calculation part and a departure risk calculation part.

As used herein, "drivable width" indicates the width of a road area within which a vehicle can travel and which is defined considering the lane width of the road, obstacles, and the like.

A motion strategy controller 15, which serves as a second driver assistance control unit, includes a microcomputer and is connected to action strategy controller 14 through the communication line. Motion strategy controller 15 is configured to receive the target trajectory-related information and the lane departure risk-related information calculated by action strategy controller 14.

Motion strategy controller 15 is further configured to, based on the target trajectory-related information and the lane departure risk-related information, calculate and output command signals for instructing a steering operation, an engine output, a brake operation, and/or the like; that is, calculate and output operation variables, so as to prevent vehicle 1 from departing from the drivable width and to ensure the driving stability of vehicle 1 in a compatible manner.

In other words, motion strategy controller 15 is a driver assistance device having a function to serve as an actuator operation variable calculation part configured to determine actuator operation variable-related information regarding an operation variable of an actuator related to steering and braking/driving operations of vehicle 1.

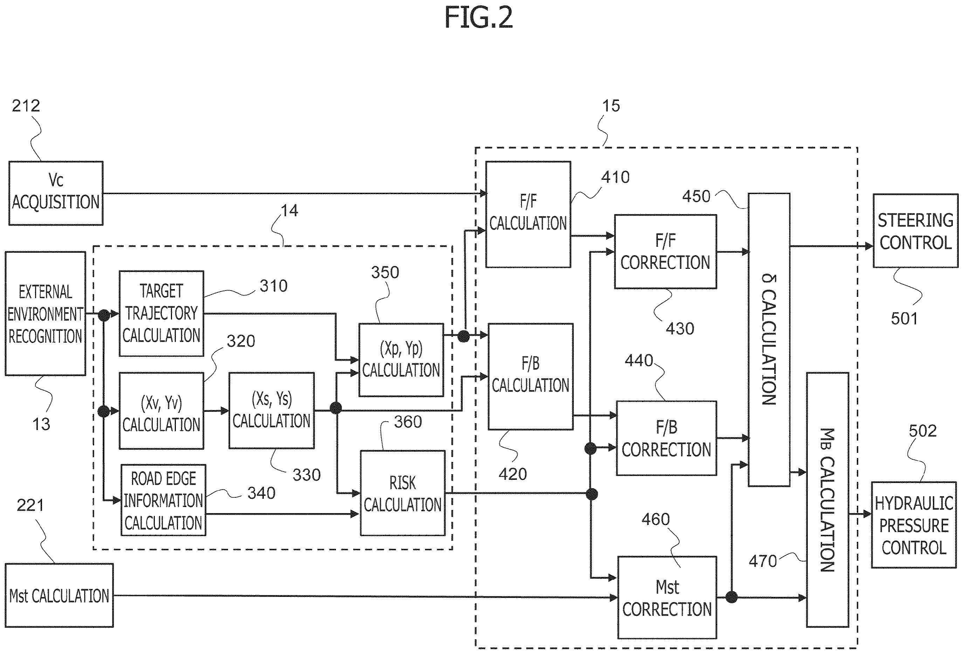

FIG. 2 is a functional block diagram of an implementation of a driver assistance system 200 that includes action strategy controller 14 and motion strategy controller 15.

Action strategy controller 14 has functions to serve as a target trajectory calculation part 310, a host vehicle position calculation part 320, a preview point calculation part 330, a road edge information calculation part 340, a target point coordinate calculation part 350, and a departure risk calculation part 360.

Target trajectory calculation part 310 is configured to receive the external environment information acquired by external environment recognition control unit 13 and to calculate the target trajectory of vehicle 1 based on the shape of the road and obstacles ahead of vehicle 1.

Host vehicle position calculation part 320 is configured to receive the external environment information acquired by external environment recognition control unit 13 and to calculate the current position coordinates $(Xv, Yv)$ of vehicle 1.

Preview point calculation part 330 is configured to calculate a preview point $(Xs, Ys)$ based on the current position coordinates $(Xv, Yv)$ calculated by host vehicle position calculation part 320. The preview point $(Xs, Ys)$ indicates a position of a predetermined time future of vehicle 1.

Target point coordinate calculation part 350 is configured to calculate, as target point coordinates $(Xp, Yp)$, coordinates of a point, closest to the preview point $(Xs, Ys)$, on the target trajectory.

Road edge information calculation part 340 is configured to receive the external environment information acquired by external environment recognition control unit 13 and to calculate the road edge information defining the boundary of a road area within which vehicle 1 can travel and which is determined considering the lane width, obstacles, and the like.

Departure risk calculation part 360 is configured to calculate, as departure risks, a left-edge road departure risk $COR_L$ and a right-edge road departure risk $COR_R$, based on the preview point ($Xs$, $Ys$), the road edge information, and the like. The left-edge road departure risk $COR_L$ indicates a risk that vehicle 1 may depart from the road across the left road edge. The right-edge road departure risk $COR_R$ indicates a risk that vehicle 1 may depart from the road across the right road edge.

Specifically, departure risk calculation part 360 generates a risk map and refers to the risk map to determine the departure risks $COR_L$, $COR_R$ corresponding to the preview point *(Xs, Ys)*. As used herein, "risk map" indicates information on a distribution of a risk that vehicle 1 may depart from the drivable width of a road on which vehicle 1 travels.

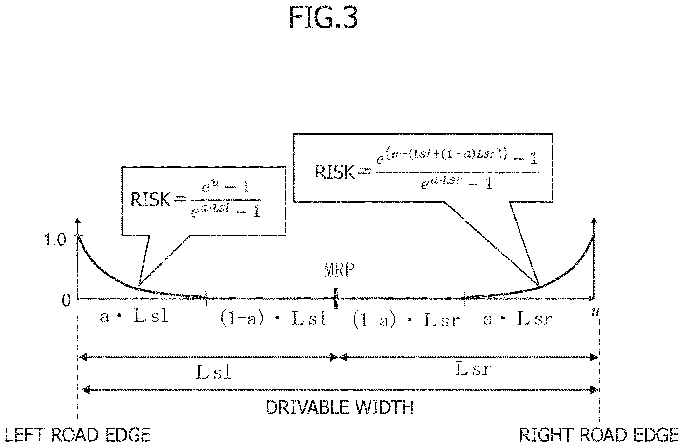

FIG. 3 illustrates an example of general characteristics of the risk map.

The risk map is generated such that the departure risk is minimized in an area sufficiently far from the left and right road edges (in other words, obstacles) and increases exponentially with a decrease in the distance to the left or right road edge. Furthermore, in the risk map, the values of the left-edge road departure risk $COR_L$ and the right-edge road departure risk $COR_R$ are normalized between "0" and "1" such that the departure risk is set to "1" at at least one point where the departure from the drivable width will definitely occur, and set to "0" at at least one point where the risk of departure from the drivable width is the minimum.

Note, however, that each value of the left-edge road departure risk $COR_L$ and the right-edge road departure risk $COR_R$ may be correlated to a risk level in any desired manner.

The risk map will be described in more detail later.

Motion strategy controller 15 is configured to receive information calculated by action strategy controller 14, such as regarding the target trajectory, the target point coordinates ($Xp$, $Yp$)*,* the preview point ($Xs$, $Ys$), the left-edge road departure risk $COR_L$, and the right-edge road departure risk $COR_R$, and also receive information on the vehicle speed $Vc$ acquired by a vehicle speed acquisition part 212, information on a yaw moment for stabilizing the behavior of vehicle 1 calculated by a yaw moment calculation part 221, and other information.

Based on the received information as described above, motion strategy controller 15 calculates information on a target steering variable and information on a target braking moment, and outputs these calculation results to a steering variable control part 501 and a hydraulic pressure control part 502.

As used herein, "braking moment" refers to a turning moment produced by the brake control.

Steering variable control part 501 is configured to output, to the actuator of steering device 12, information on the operation variable corresponding to the target steering variable, thereby controlling the steering operation of steering device 12.

Hydraulic pressure control part 502 is configured to control the hydraulic pressures to be supplied to wheel cylinders 6-9, that is, the braking forces to be applied to wheels 2-5, in accordance with the target braking moment.

Motion strategy controller 15 includes, as functional parts for calculating the target steering variable, an F/F operation variable calculation part 410, an F/B operation variable calculation part 420, an F/F operation variable correction part 430, an F/B operation variable correction part 440, and a target steering variable calculation part 450.

In addition, motion strategy controller 15, includes, as functional parts for calculating the target braking moment, a yaw moment correction part 460 and a braking moment calculation part 470.

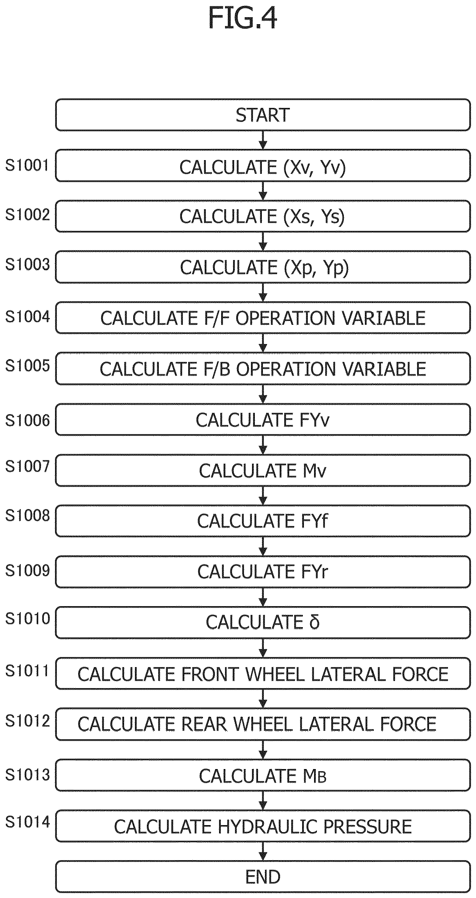

FIG. 4 is a flowchart schematically showing a procedure for calculating a steering operation variable and a braking operation variable performed by driver assistance system 200, which includes action strategy controller 14 and motion strategy controller 15.

First, based on the external environment information, host vehicle position calculation part 320 in action strategy controller 14 calculates the current position coordinates ($Xv$, $Yv$) (step S1001). Then, based on the external environment information, preview point calculation part 330 in action strategy controller 14 calculates the preview point ($Xs$, $Ys$) (step S1002).

Based on the preview point *(Xs, Ys)* and the target trajectory, target point coordinate calculation part 350 in action strategy controller 14 calculates target point coordinates ($Xp$, $Yp$) (step S1003).

Then, F/F operation variable calculation part 410 in motion strategy controller 15 calculates a feedforward F/F operation variable $FY_{FF}$ of a turning force for lane keeping (step S1004). F/B operation variable calculation part 420 in motion strategy controller 15 calculates a feedback F/B operation variable $FY_{FB}$ of the turning force for lane keeping (step S1005).

Then, target steering variable calculation part 450 in motion strategy controller 15 calculates, as a lateral force required for lane keeping, the sum $FYv$ of the feedforward F/F operation variable $FY_{FF}$ and the feedback F/B operation variable $FY_{FB}$ (step S1006).

Furthermore, target steering variable calculation part 450 calculates a moment Mv required for stabilizing the behavior of vehicle 1 (step S1007), then calculates a target front wheel lateral force $FY_f$ (step S1008), and calculates a target rear wheel lateral force $FY_r$ (step S1009).

Then, target steering variable calculation part 450 calculates a target steering angle $\delta$ based on the front wheel lateral force $FY_f$ (step S1010).

Then, in accordance with a friction coefficient of a road surface with which the wheels of vehicle 1 are in contact, braking moment calculation part 470 in motion strategy controller 15 calculates an achievable front wheel lateral force (step S1011), and calculates an achievable rear wheel lateral force (step S1012).

Then, braking moment calculation part 470 calculates a braking moment $M_B$, which is a target value of the turning moment to be produced by the brake control (step S1013), and calculates the brake hydraulic pressures of wheels 2-5 based on the braking moment $M_B$ (step S1014).

Next, arithmetic processing for calculating the target steering variable performed by motion strategy controller 15 will be described in detail.

First, based on the shape of the curve at the target point coordinates *(Xp, Yp)*, the vehicle speed *Vc,* and the mass m of vehicle 1, F/F operation variable calculation part 410 calculates the feedforward F/F operation variable $FY_{FF}$ of a turning force required for vehicle 1 to stably turn the approaching curve, i.e., a turning force for lane keeping, using Expression 1 below (see step S1004 in FIG. 4).

Here, the shape of the curve at the target point coordinates *(Xp, Yp)* may be indicated by a road curvature *Ks* at the target point coordinates *(Xp, Yp),* for example.

$$FY_{FF} = m \cdot Ks \cdot Vc^2$$

(Expression 1)

Then, based on a displacement $G_{FB}$ from the target point coordinates *(Xp, Yp)* to the preview point *(Xs, Ys),* F/B operation variable calculation part 420 calculates the feedback F/B operation variable $FY_{FB}$ of the turning force for lane keeping, using, for example, a PID control as shown in Expression 2 (see step S1005 in FIG. 4).

$$FY_{FB} = PID(G_{FB})$$

(Expression 2)

Then, based on the feedforward F/F operation variable $FY_{FF}$ calculated by F/F operation variable calculation part 410, the feedback F/B operation variable $FY_{FB}$ calculated by F/B operation variable calculation part 420, and a yaw moment *Mst* for stabilizing the behavior of vehicle 1 (referred to as "vehicle behavior stabilizing yaw moment *Mst*" below) calculated by yaw moment calculation part 221, target steering variable calculation part 450 calculates the target steering variable in the following manner.

Note that, as will be described later, the feedforward F/F operation variable $FY_{FF}$, the feedback F/B operation variable $FY_{FB}$, and the vehicle behavior stabilizing yaw moment *Mst* are used to calculate the target steering variable by target steering variable calculation part 450 after they have been corrected based on the risk that vehicle 1 may depart from the drivable width. Such correction based on the departure risk will be described later in detail.

First, target steering variable calculation part 450 calculates, as a lateral force required to move vehicle 1 from the current position coordinates *(Xv, Yv)* to the target point coordinates *(Xp, Yp),* the sum *FYv* of the feedforward F/F operation variable $FY_{FF}$ and the feedback F/B operation variable $FY_{FB}$ *(FYv = $FY_{FF}$ + $FY_{FB}$)* (see step S1006 in FIG. 4).

In addition, target steering variable calculation part 450 calculates a yaw moment *ML* expected to be generated when the lateral force $FY_V$ *is* applied to vehicle 1, using the transfer function shown in Expression 3.

$$\frac{ML}{FY_V} = G_r(0) \cdot \frac{s(1 + T_r s)}{\left(G_\beta(0) \cdot T_\beta(0)\right)S^2 + \left(T_r \cdot G_r(0) + G_\beta(0)\right)S + G_r(0)} \cdot \frac{1}{m \cdot Vc} \cdot I_z$$

(Expression 3)

As used herein, *m* is the vehicle mass, *Vc* is the vehicle speed, $K_f$ *is* the front wheel cornering power, $K_r$ is the rear wheel cornering power, $L_f$ is the distance between the center of gravity and the front axle, $I_r$ is the distance between the center of gravity and the rear axle, *L* is the wheelbase, $I_z$ is the vehicle inertia, *A* is the stability factor, and S is the Laplace operator.

$G_r(0)$, $G_\beta(0)$, $T_r$, $T_\beta$ in Expression 3 are as defined by Expressions 4 below.

$$G_r(0) = \left(\frac{1}{1 + A \cdot Vc^2}\right) \cdot \frac{Vc}{L}$$

$$G_\beta(0) = \left(\frac{1 - \dfrac{m \cdot L_f}{2 \cdot L \cdot L_r \cdot K_r} \cdot Vc^2}{1 + A \cdot Vc^2}\right) \cdot \frac{L_r}{L}$$

$$T_r = \frac{m \cdot L_f \cdot Vc}{2 \cdot L \cdot K_r}$$

$$T_\beta = \frac{I_z \cdot Vc}{2 \cdot L \cdot L_r \cdot K_r \cdot \left(1 - \dfrac{m \cdot L_f}{2 \cdot L \cdot L_r \cdot K_r} \cdot Vc^2\right)}$$

(Expressions 4)

Assume that the vehicle behavior stabilizing yaw moment *Mst* is given by yaw moment calculation part 221, the motion of vehicle 1 travelling on the lane ahead in a favorable manner with stable behavior may be described by Expressions 5 below (see step S1007 in FIG. 4).

$$FY_V = FY_f + FY_r$$

$$Mv = ML + Mst = L_f \cdot FY_f - L_r \cdot FY_r$$

(Expressions 5)

, where $FY_f$ is the total lateral force of the two front wheels, and $FY_r$ is the total lateral force of the two rear wheels.
Simplifying Expressions 5 above gives Expressions 6 below (see steps S1008 and S1009 in FIG. 4).

$$FY_f = \frac{Mv}{L} + \frac{L_r}{L} FY_V$$

$$FY_r = -\frac{Mv}{L} + \frac{L_f}{L} FY_V$$

(Expressions 6)

Then, target steering variable calculation part 450 calculates the target steering angle $\delta$ by applying the front wheel lateral force $FY_f$ calculated using the former of Expressions 6 to Expression 7 below (see step S1010 in FIG. 4).

$$\delta = \beta + \frac{L_f}{Vc}\gamma - \frac{FY_f}{2 \cdot K_f}$$

(Expression 7)

, where $\beta$ is the sideslip angle, and $\gamma$ is the yaw rate.
Information on the target steering angle $\delta$ calculated by target steering variable calculation part 450 is given to steering variable control part 501. In accordance with the information on the target steering angle $\delta$, steering variable control part 501, which serves as an actuator operation output part, drives a motor for generating a steering force in steering device 12 so as to control such that the steering angle of the vehicle reaches the target steering angle $\delta$. Here, the motor serves as an actuator related to a steering operation of vehicle 1.
Next, the function of braking moment calculation part 470 in motion strategy controller 15 will be described.
Here, depending on one or more constraints such as a frictional force of a road surface, a lateral force expected based on the target steering angle $\delta$ calculated by target steering variable calculation part 450 may not be actually generated by a steering operation that is performed in accordance with the target steering angle $\delta$.
The frictional force of a road surface is a physical constraint, and thus, it is not possible to completely compensate for such an insufficient lateral force generated by the steering operation. Instead, in this case, braking moment calculation part 470 calculates practically achievable target front and rear wheel lateral forces $FY_{f\mu}$, $FY_{r\mu}$. Then, based on the target front and rear wheel lateral forces $FY_{f\mu}$, $FY_{r\mu}$, braking moment calculation part 470 calculates a braking moment for compensating for the shortage of the vehicle moment.

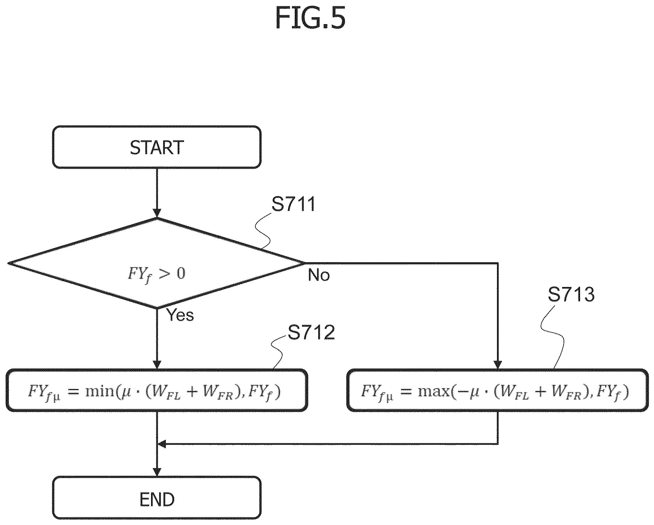

FIG. 5 is a flowchart of a procedure for calculating the front wheel lateral force $FY_{f\mu}$ performed by braking moment calculation part 470 (details of step S1011 in FIG. 4).

First, in step S711, braking moment calculation part 470 determines whether vehicle 1 is turning right based on whether the front wheel lateral force $FY_f$ is a positive value.

When $FY_f > 0$, and thus, vehicle 1 is turning right, the operation proceeds to step S712. In step S712, braking moment calculation part 470 calculates the front wheel lateral force $FY_{f\mu}$ using the following equation.

$$FY_{f\mu} = \min(\mu \cdot (W_{FL} + W_{FR}), FY_f)$$

, where $W_{FL}$, $W_{FR}$ are loads on the left and right front wheels, respectively.

Specifically, using the above equation, braking moment calculation part 470 selects the smaller of "$\mu \cdot (W_{FL} + W_{FR})$" and "$FY_f$" (front wheel lateral force), and sets the selected value to the practically achievable target front wheel lateral force $FY_{f\mu}$.

On the other hand, when $FY_f \leq 0$, and thus, vehicle 1 is turning left, the operation proceeds to step S713. In step S713, braking moment calculation part 470 calculates the front wheel lateral force $FY_{f\mu}$ using the following equation.

$$FY_{f\mu} = \max(-\mu \cdot (W_{FL} + W_{FR}), FY_f)$$

That is, when $FY_f \leq 0$, and thus, vehicle 1 is turning left, braking moment calculation part 470 selects the smaller in absolute value of "$-\mu \cdot (W_{FL} + W_{FR})$" and "$FY_f$" (front wheel lateral force), and sets the selected value to the practically achievable target front wheel lateral force $FY_{f\mu}$.

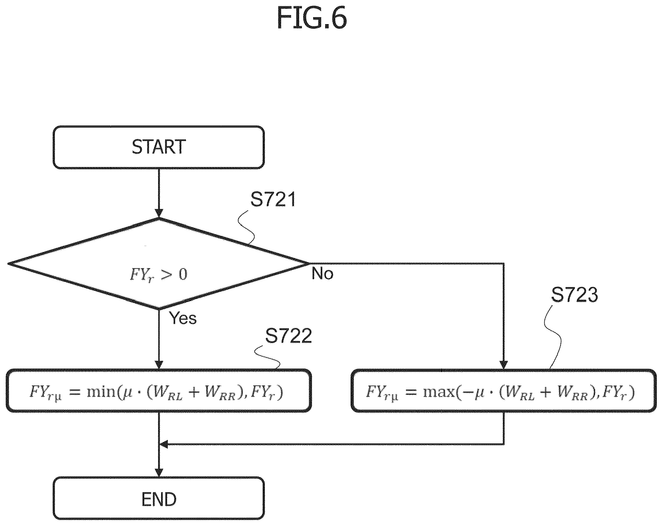

FIG. 6 is a flowchart of a procedure for calculating the rear wheel lateral force $FY_{r\mu}$ performed by braking moment calculation part 470 (details of step S1012 in FIG. 4).

First, in step S721, braking moment calculation part 470 determines whether vehicle 1 is turning right based on whether the rear wheel lateral force $FY_r$ is a positive value.

When $FY_r > 0$, and thus, vehicle 1 is turning right, the operation proceeds to step S722. In step S722, braking moment calculation part 470 calculates the rear wheel lateral force $FY_{r\mu}$ using the following equation.

$$FY_{r\mu} = \min(\mu \cdot (W_{RL} + W_{RR}), FY_r)$$

, where $W_{RL}$, $W_{RR}$ are loads on the left and right rear wheels, respectively.

Specifically, using the above equation, braking moment calculation part 470 selects the smaller of "$\mu \cdot (W_{RL} + W_{RR})$" and "$FY_r$" (rear wheel lateral force), and sets the selected value to the practically achievable target rear wheel lateral force $FY_{r\mu}$.

On the other hand, when $FY_r \leq 0$, and thus, vehicle 1 is turning left, the operation proceeds to step S723. In step S723, braking moment calculation part 470 calculates the rear wheel lateral force $FY_{r\mu}$ using the following equation.

$$FY_{r\mu} = \max(-\mu \cdot (W_{RL} + W_{RR}), FY_r)$$

That is, when $FY_r \leq 0$, and thus, vehicle 1 is turning left, braking moment calculation part 470 selects the smaller in absolute value of "$-\mu \cdot (W_{RL} + W_{RR})$" and "$FY_r$" (rear wheel lateral force), and sets the selected value to the practically achievable target rear wheel lateral force $FY_{r\mu}$.

Having determined the front and rear wheel lateral forces $FY_{f\mu}$, $FY_{r\mu}$ as described above, braking moment calculation part 470 calculates a moment $Mac$ to be generated by the total lateral force of the front and rear wheels that is constrained by the frictional force of a road surface, by applying, to the former of the following equations, the front and rear wheel lateral forces $FY_{f\mu}$, $FY_{r\mu}$, the distance $L_f$ between the center of gravity and the front axle, and the distance $L_r$ between the center of gravity and the rear axle, and calculates a braking moment $M_B$ by applying the moment $Mac$ and the moment $Mv$ $(Mv = ML + Mst)$ to the latter of the following equations (see step S1011 in FIG. 4).

$$Mac = L_f \cdot FY_{f\mu} - L_r \cdot FY_{r\mu}$$

$$M_B = Mv - Mac$$

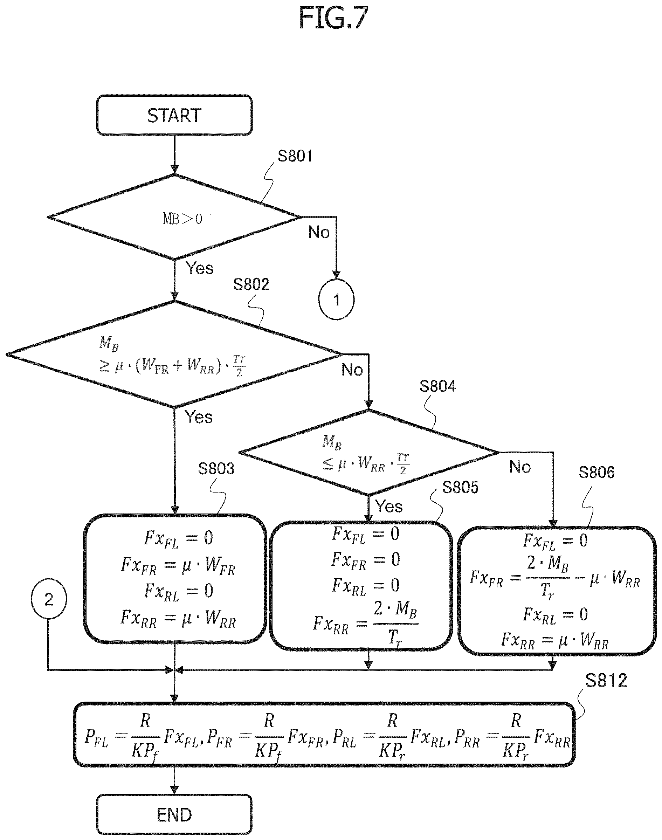

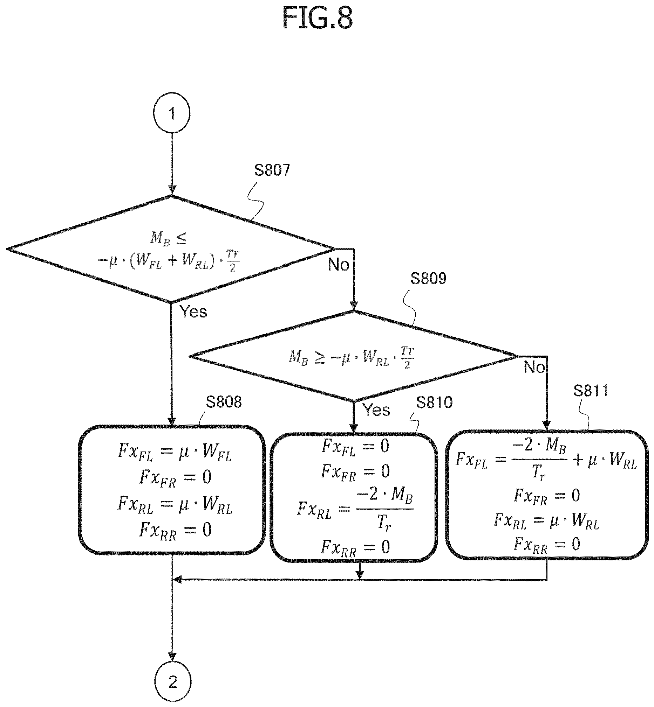

Furthermore, braking moment calculation part 470 allocates the braking moment $M_B$ to the front and rear wheels as brake hydraulic pressures $P_{FL}$, $P_{FR}$, $P_{RL}$, $P_{RR}$ in accordance with the procedure shown in the flowcharts of FIGS. 7 and 8 (details of step S1014 in FIG. 4).

In the flowcharts of FIGS. 7 and 8, R is the tire rolling radius, $KP_f$ is the conversion coefficient for the front wheel brake hydraulic pressure, $KP_r$ is the conversion coefficient for the rear wheel brake hydraulic pressure, and $T_r$ is the tread width.

First, in step S801, braking moment calculation part 470 determines whether the braking moment $M_B$ is a right turning moment based on whether the braking moment $M_B$ is a positive value.

When braking moment calculation part 470 determines that the braking moment $M_B$ is a right turning moment, the operation proceeds to step S802. In step S802, braking moment calculation part 470 determines whether the braking moment $M_B$ is equal to or greater than "$\mu \cdot (W_{FR} + W_{RR}) \cdot T_r/2$"; i.e., whether the braking moment $M_B$ is equal to or greater than a right turning moment to be obtained by the braking forces of the front and rear right wheels that are constrained by the frictional force of the road surface.

When braking moment calculation part 470 determines that the braking moment $M_B$ is equal to or greater than "$\mu \cdot (W_{FR} + W_{RR}) \cdot T_r/2$", the operation proceeds to step S803. In step S803, braking moment calculation part 470 calculates braking/driving forces $Fx_{FL}$, $Fx_{FR}$, $Fx_{RL}$, $Fx_{RR}$ of the front and rear wheels, as follows. As used herein, the braking/driving forces $Fx_{FL}$, $Fx_{FR}$, $Fx_{RL}$, $Fx_{RR}$ are forces to be applied to the tires in the vehicle longitudinal direction.

$$Fx_{FL} = 0$$

$$Fx_{FR} = \mu \cdot W_{FR}$$

$$Fx_{RL} = 0$$

$$Fx_{RR} = \mu \cdot W_{RR}$$

In other words, in step S803, braking moment calculation part 470 sets target braking/driving forces of the front and rear right wheels to values that are constrained by the frictional force of the road surface, so that a right turning moment constrained by the frictional force of the road surface is generated (right turning moment < braking moment $M_B$).

On the other hand, when braking moment calculation part 470 determines in step S802 that the braking moment $M_B$ is less than "$\mu \cdot (W_{FR} + W_{RR}) \cdot T_r/2$", and thus, that the braking moment $M_B$ can be generated without being constrained by the frictional force of the road surface, the operation proceeds to step S804.

In step S804, braking moment calculation part 470 then determines whether the braking moment $M_B$ is equal to or less than "$\mu \cdot W_{RR} \cdot T_r/2$".

When the braking moment $M_B$ is equal to or less than "$\mu \cdot W_{RR} \cdot T_r/2$", and thus, the required right turning moment is expected to be obtained solely by braking of the right rear wheel, the operation proceeds to step S805. In step S805, braking moment calculation part 470 sets the braking/driving forces $Fx_{FL}$, $Fx_{FR}$, $Fx_{RL}$, $Fx_{RR}$ of the front and rear wheels, as follows.

$$Fx_{FL} = 0$$

$$Fx_{FR} = 0$$

$$Fx_{RL} = 0$$

$$Fx_{RR} = 2 \cdot M_B/T_r$$

On the other hand, when the braking moment $M_B$ is more than "$\mu \cdot W_{RR} \cdot T_r/2$", and thus, the required right turning moment is not expected to be obtained solely by braking of the right rear wheel, the operation proceeds to step S806. In step S806, braking moment calculation part 470 sets the braking/driving forces $Fx_{FL}$, $Fx_{FR}$, $Fx_{RL}$, $Fx_{RR}$ of the front and rear wheels, as follows.

$$Fx_{FL} = 0$$

$$Fx_{FR} = 2 \cdot M_B/T_r - \mu \cdot W_{RR}$$

$$Fx_{RL} = 0$$

$$Fx_{RR} = \mu \cdot W_{RR}$$

In other words, in step S806, braking moment calculation part 470 sets the target braking/driving force of the right rear wheel to a value that is constrained by the frictional force of the road surface, and sets the target braking/driving force of the right front wheel to a value that makes up for a gap between the turning moment expected from the right rear wheel and the required right turning moment.

When braking moment calculation part 470 determines in step S801 that the braking moment $M_B$ is not a positive value, i.e., determines that the braking moment $M_B$ is 0 or a left turning moment, the operation proceeds to step S807.

In step S807, braking moment calculation part 470 determines whether the braking moment $M_B$ ($M_B \leq 0$) is equal to or less than "$\mu \cdot (W_{FL} + W_{RL}) \cdot T_r/2$"; i.e., whether the absolute value of the braking moment $M_B$ is equal to or greater than "$\mu \cdot (W_{FL} + W_{RL}) \cdot T_r/2$".

When braking moment calculation part 470 determines that the braking moment $M_B$ is equal to or less than "$\mu \cdot (W_{FL} + W_{RL}) \cdot T_r/2$", the operation proceeds to step S808. In step S808, braking moment calculation part 470 sets the braking/driving forces $Fx_{FL}$, $Fx_{FR}$, $Fx_{RL}$, $Fx_{RR}$ of the front and rear wheels, as follows.

$$Fx_{FL} = \mu \cdot W_{FL}$$

$$Fx_{FR} = 0$$

$$Fx_{RL} = \mu \cdot W_{RL}$$

$$Fx_{RR} = 0$$

In other words, braking moment calculation part 470 sets the target braking/driving forces of the front and rear left wheels to values that are constrained by the frictional force of the road surface, so that a left turning moment constrained by the frictional force of the road surface is generated.

On the other hand, when braking moment calculation part 470 determines in step S807 that the braking moment $M_B$ is more than "$\mu \cdot (W_{FL} + W_{RL}) \cdot T_r/2$" i.e., the absolute value of the braking moment $M_B$ is less than "$\mu \cdot (W_{FL} + W_{RL}) \cdot T_r/2$", and thus, determines that the braking moment $M_B$ can be generated without being constrained by the frictional force of the road surface, the operation proceeds to step S809.

In step S809, braking moment calculation part 470 then determines whether the braking moment $M_B$ is equal to or greater than "$-\mu \cdot W_{RL} \cdot T_r/2$".

When the braking moment $M_B$ is equal to or greater than "$-\mu \cdot W_{RL} \cdot T_r/2$", and thus, the required left turning moment is expected to be obtained solely by braking of the left rear wheel, the operation proceeds to step S810. In step S810, braking moment calculation part 470 sets the braking/driving forces $Fx_{FL}$, $Fx_{FR}$, $Fx_{RL}$, $Fx_{RR}$ of the front and rear wheels, as follows.

$$Fx_{FL} = 0$$

$$Fx_{FR} = 0$$

$$Fx_{RL} = -2 \cdot M_B / T_r$$

$$Fx_{RR} = 0$$

The minus sign in "$Fx_{RL} = -2 \cdot M_B / T_r$" indicates that a positive braking/driving force is calculated based on the braking moment $M_B$, which is a negative value.

On the other hand, when the braking moment $M_B$ is less than "$\mu \cdot W_{RL} \cdot T_r / 2$", and thus, the required left turning moment is not expected to be obtained solely by braking of the left rear wheel, the operation proceeds to step S811. In step S811, braking moment calculation part 470 sets the braking/driving forces $Fx_{FL}$, $Fx_{FR}$, $Fx_{RL}$, $Fx_{RR}$ of the front and rear wheels, as follows.

$$Fx_{FL} = -2 \cdot M_B / T_r + \mu \cdot W_{RL}$$

$$Fx_{FR} = 0$$

$$Fx_{RL} = \mu \cdot W_{RL}$$

$$Fx_{RR} = 0$$

In other words, in step S811, braking moment calculation part 470 sets the target braking/driving force of the left rear wheel to a value that is constrained by the frictional force of the road surface, and sets the target braking/driving force of the left front wheel to a value that makes up for a gap between the turning moment expected from the left rear wheel and the required left turning moment.

When braking moment calculation part 470 has set the braking/driving forces $Fx_{FL}$, $Fx_{FR}$, $Fx_{RL}$, $Fx_{RR}$, which are the target braking/driving forces of the wheels in the above manner, the operation proceeds to step S812. In step S812, braking moment calculation part 470 converts the braking/driving forces $Fx_{FL}$, $Fx_{FR}$, $Fx_{RL}$, $Fx_{RR}$ into brake hydraulic pressures *PFL, PFR, PRL, PRR,* as follows.

$$P_{FL} = Fx_{FL} \cdot R / KP_f$$

$$P_{FR} = Fx_{FR} \cdot R / KP_f$$

$$P_{RL} = Fx_{RL} \cdot R / KP_r$$

$$P_{RR} = Fx_{RR} \cdot R / KP_r$$

Braking moment calculation part 470 then outputs information on the brake hydraulic pressures $P_{FL}$, $P_{FR}$, $P_{RL}$, $P_{RR}$ to hydraulic pressure control part 502. Based on the received information on the brake hydraulic pressures $P_{FL}$, $P_{FR}$, $P_{RL}$, $P_{RR}$, hydraulic pressure control part 502, which serves as the actuator operation output part, controls the actuators for adjusting the brake hydraulic pressures of the wheels.

As described above, motion strategy controller 15 calculates the target steering angle $\delta$ by taking into account the yaw moment for stabilizing the behavior of vehicle 1, and calculates the braking moment that compensates for the shortage of the lateral force to be generated by the steering operation performed based on the target steering angle $\delta$. This ensures both the ability to trace the target trajectory and the behavioral stability of vehicle 1.

Next, the functions of F/F operation variable correction part 430, F/B operation variable correction part 440, and yaw moment correction part 460 in motion strategy controller 15 will be described in detail.

Assume here a case in which vehicle 1 travels on a right-hand curve and there is a high risk of departure to the right, which corresponds to the inside of the turn.

When vehicle 1 travels on a right-hand curve, the feedforward F/F operation variable $FY_{FF}$ requests a force that moves vehicle 1 to the right. However, based on the high risk of departure to the right, the feedback F/B operation variable $FY_{FB}$ requests a force that moves vehicle 1 to the left.

Here, when there is a risk of departure to the right under conditions in which vehicle 1 is on a road surface having a low friction coefficient and the tires have highly nonlinear force characteristics, the rightward movement distance requested by the feedforward F/F operation variable $FY_{FF}$ may have an adverse effect, causing lane departure of vehicle 1, depending on the balance between the feedforward F/F operation variable $FY_{FF}$ and the feedback F/B operation variable $FY_{FB}$.

Accordingly, F/F operation variable correction part 430 and F/B operation variable correction part 440 correct the feedforward F/F operation variable $FY_{FF}$ and the feedback F/B operation variable $FY_{FB}$ in accordance with the departure risks $COR_L$, $COR_R$ as described below.

F/F operation variable correction part 430 determines whether vehicle 1 is turning left or right based on whether the road curvature $Ks$ is negative or positive, and corrects the feedforward F/F operation variable $FY_{FF}$ based on the departure risk $COR_L$, $COR_R$ as follows.

- When $Ks < 0$ (when vehicle 1 turns left):

$$FY*_{FF} = m \cdot Ks \cdot Vc^2 \cdot (1 - COR_L)$$

- When $Ks > 0$ (when vehicle 1 turns right):

$$FY*_{FF} = m \cdot Ks \cdot Vc^2 \cdot (1 - COR_R)$$

That is, when, for example, vehicle 1 travels on a right-hand curve, F/F operation variable correction part 430 downwardly corrects the feedforward F/F operation variable $FY_{FF}$ by a greater amount so as to further reduce the lateral force that moves vehicle 1 to the right (i.e., toward the inside of the turn), as the risk of departure to the right (i.e., toward the inside of the turn) is higher.

This prevents such an adverse effect of the feedforward F/F operation variable $FY_{FF}$, thereby preventing vehicle 1 from turning more inward than intended and departing from the curve.

Furthermore, F/B operation variable correction part 440 determines whether vehicle 1 is traveling on the right side or the left side of the target point coordinates *(Xp, Yp)* based on whether the displacement $G_{FB}$ from the target point coordinates *(Xp, Yp)* to the preview point *(Xs, Ys)* is negative or positive, and corrects the feedback F/B operation variable $FY_{FB}$ based on the departure risk $COR_L$, $COR_R$ as follows.

- When $G_{FB} < 0$ (i.e., when vehicle 1 is traveling on the right side of the target point coordinates *(Xp, Yp))*:

$$FY*_{FB} = \mathrm{PID}(G_{FB}) \cdot (1 - COR_L)$$

- When $G_{FB} > 0$ (i.e., when vehicle 1 is traveling on the left side of the target point coordinates *(Xp, Yp))*:

$$FY*_{FB} = \mathrm{PID}(G_{FB}) \cdot (1 - COR_R)$$

That is, when, for example, vehicle 1 is traveling on the right side of the target point coordinates *(Xp, Yp)*, and thus, the feedback F/B operation variable $FY_{FB}$ requests a force that moves vehicle 1 to the left, F/B operation variable correction part 440 reduces such a lateral force that moves vehicle 1 to the target point coordinates *(Xp, Yp)* by a greater amount as the left-edge road departure risk $COR_L$ is higher.

This reduces or prevents vehicle 1 from departing from the lane due to the lateral force generated based on the feedback F/B operation variable $FY_{FB}$.

Yaw moment correction part 460 has a function of correcting the vehicle behavior stabilizing yaw moment *Mst* in accordance with the departure risks $COR_L$, $CORR$.

Assume a case in which there is a high risk that vehicle 1 may depart from the road across the right road edge but vehicle 1 has a tendency to spin counterclockwise, and thus, a yaw moment that helps vehicle 1 turn right is requested in order to stabilize vehicle 1.

In this case, calculating the target steering angle $\delta$ in the above manner may result in steering vehicle 1 to turn right, i.e., may result in counter-steering, and thus, may help vehicle 1 depart from the lane.

Thus, yaw moment correction part 460 corrects the vehicle behavior stabilizing yaw moment *Mst* according to the departure risks $COR_L$, $COR_R$ as described below.

- When *Mst* < 0 (which helps vehicle 1 turn left):

$$M^*st = Mst \cdot (1 - COR_L)$$

- When *Mst* > 0 (which helps vehicle 1 turn right):

$$M^*st = Mst \cdot (1 - COR_R)$$

That is, when, for example, there is a high risk that vehicle 1 may depart from the road across the right road edge, but the vehicle behavior stabilizing yaw moment *Mst* that helps vehicle 1 turn right is requested, yaw moment correction part 460 corrects the vehicle behavior stabilizing yaw moment *Mst* downward so that vehicle 1 is less helped to turn right, thereby preventing vehicle 1 from departing from the road across the right road edge.

As described above, target steering variable calculation part 450 calculates the steering angle operation variable $\delta$ using the values $FY^*_{FF}$, $FY^*_{FB}$, $M^*st$ corrected in accordance with the departure risk. With this configuration, when there is a high departure risk, priority is given to a steering operation to separate vehicle 1 from the road edge on the higher departure risk side over other steering operations. Furthermore, when vehicle 1 is then separated satisfactorily from the road edge, vehicle 1 seamlessly transitions to a state in which the requested vehicle behavior stabilizing value is appropriately processed as usual. This allows seamless switching between control performed when vehicle 1 is at a high departure risk and control performed when vehicle 1 is at a low departure risk.

Furthermore, as described above, braking moment calculation part 470 calculates the braking moment $M_B$ using the values $FY^*_{FF}$, $FY^*_{FB}$, $M^*st$ corrected in accordance with the departure risk. This ensures both the ability to trace the target trajectory and the behavioral stability of vehicle 1 in a compatible manner by taking into account the departure risk.

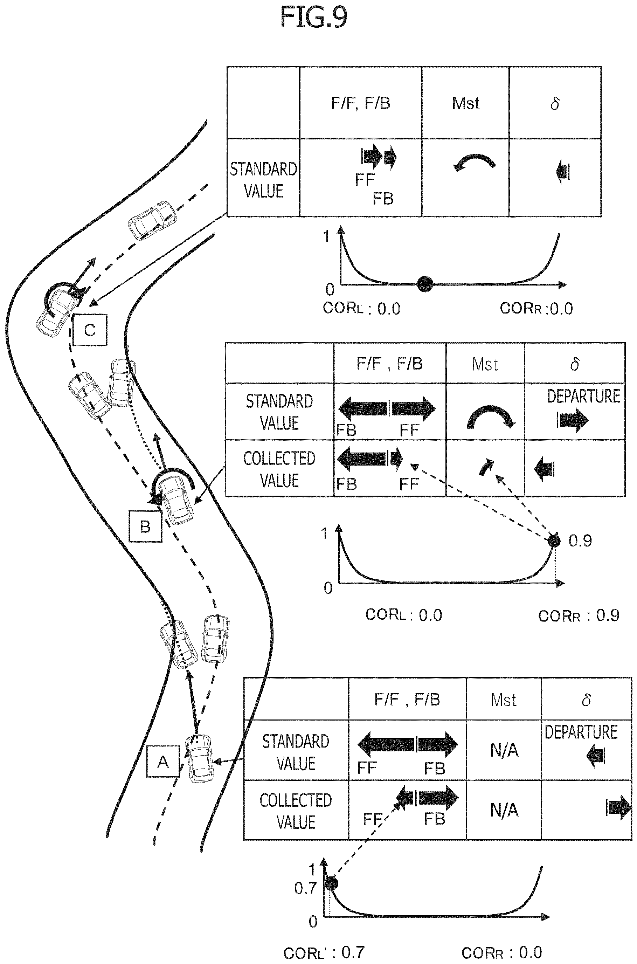

FIG. 9 shows an example illustrating how action strategy controller 14 and motion strategy controller 15 use their functions to correct the target steering variable in accordance with the vehicle behavior stabilization request and the departure risk, during autonomous driving of vehicle 1.

For example, when vehicle 1 is at the position A, the preview point (Xs, *Ys)* is located on the left side of the target point coordinates *(Xp, Yp)*. Thus, the feedback F/B operation variable $FY_{FB}$ is set to a value that generates a right turning force.

However, since a left-hand curve is approaching vehicle 1 at the position A, the feedforward F/F operation variable $FY_{FF}$ is set to a value that generates a left turning force. Furthermore, the feedforward F/F operation variable $FY_{FF}$ is greater in absolute value than the feedback F/B operation variable $FY_{FB}$. Thus, applying, to vehicle 1, a left turning force based on the uncorrected feedforward F/F operation variable $FY_{FF}$ may cause vehicle 1 to depart from the road across the left road edge.

Specifically, when vehicle 1 is at the position A, the preview point *(Xs, Ys)* is located close to the left edge of the road (close to the inside of the turn). Thus, the left-edge road departure risk $COR_L$ is set to a value higher than zero ($COR_L$ = 0.7 in FIG. 9) and the right-edge road departure risk $COR_R$ is set to zero.

Since vehicle 1 is to travel on the left side of the target point coordinates *(Xp, Yp)*, the feedback F/B operation variable $FY_{FB}$ is calculated using $FY^*_{FB}$ = PID($G_{FB}$)·(1 - $COR_R$) = PID($G_{FB}$)·(1 - 0). This means that substantially no correction for addressing the departure risk is applied to the right turning force requested by the feedback F/B operation variable $FY_{FB}$.

Furthermore, since a left-hand curve is approaching vehicle 1, the feedforward F/F operation variable $FY_{FF}$ is calculated using $FY^*_{FF}$ = $m \cdot Ks \cdot Vc^2 \cdot (1 - COR_L)$. This means that downward correction for addressing the departure risk is applied to the left turning force requested by the feedforward F/F operation variable $FY_{FF}$.

In short, no correction for addressing the departure risk is applied to the right turning force requested by the feedback F/B operation variable $FY_{FB}$, whereas downward correction for addressing the departure risk is applied to the left turning force requested by the feedforward F/F operation variable $FY_{FF}$. As a result, the requested right turning force increases relative to the requested left turning force, so that vehicle 1 is steered to the right and prevented from departing from the road across the left road edge.

As described above, there may be a situation in which the direction of the turning force requested by the feedforward F/F operation variable $FY_{FF}$ is opposite to the direction of the turning force requested by the feedback F/B operation variable $FY_{FB}$, and the absolute value of the feedforward F/F operation variable $FY_{FF}$ is greater than that of the feedback F/B operation variable $FY_{FB}$. In such a situation, if motion strategy controller 15 does not correct the target steering variable in accordance with the departure risk $COR_L$, $COR_R$, vehicle 1 may depart from the lane due to the feedforward F/F operation variable $FY_{FF}$.

In contrast, according to this embodiment, motion strategy controller 15 corrects the target steering variable in accordance with the departure risk $COR_L$, $COR_R$. Thus, even in such a situation, the feedforward F/F operation variable $FY_{FF}$ is corrected downward in accordance with the departure risk $COR_L$, $COR_R$, and thus, vehicle 1 is prevented from departing from the lane.

Next, how the target steering variable is corrected when vehicle 1 is at the position B and has a tendency to spin counterclockwise will be described. At the position B, a right-hand curve is approaching vehicle 1.

In this case, the preview point (Xs, Ys) is located on the right side of the target point coordinates *(Xp, Yp)*, and thus, the feedback F/B operation variable $FY_{FB}$ is set to a value that generates a left turning force. However, since a right-hand curve is approaching vehicle 1, the feedforward F/F operation variable $FY_{FF}$ is set to a value that generates a right turning force. In addition, the vehicle behavior stabilizing yaw moment *Mst* is set to a value that helps vehicle 1 turn right.

Accordingly, the directions of the turning force requested by the feedforward F/F operation variable $FY_{FF}$ and the turning force requested by the vehicle behavior stabilizing yaw moment *Mst* are opposite to the direction of the turning force requested by the feedback F/B operation variable $FY_{FB}$. Furthermore, the magnitude of the total turning force due to the feedforward F/F operation variable $FY_{FF}$ and the vehicle behavior stabilizing yaw moment *Mst* is greater than that of the feedback F/B operation variable $FY_{FB}$. Thus, without correction, the right turning force due to the feedforward F/F operation variable $FY_{FF}$ and the vehicle behavior stabilizing yaw moment *Mst* may cause vehicle 1 to depart from the lane across the right road edge.

The vehicle behavior stabilizing yaw moment *Mst* corresponds to the "vehicle stabilizing moment operation variable".

Specifically, when vehicle 1 is at the position B, the preview point *(Xs, Ys)* is located close to the right edge of the road. Thus, the right-edge road departure risk $COR_R$ is set to a value higher than zero ($COR_R$ = 0.9 in FIG. 9) and the left-edge road departure risk $COR_L$ is set to zero.

Since vehicle 1 is to travel on the right side of the target point coordinates *(Xp, Yp)*, the feedback F/B operation variable $FY_{FB}$ is calculated using $FY^*_{FB} = \mathrm{PID}(G_{FB})\cdot(1 - COR_L) = \mathrm{PID}(G_{FB})\cdot(1 - 0)$. This means that substantially no correction for addressing the departure risk is applied to the left turning force requested by the feedback F/B operation variable $FY_{FB}$.

Furthermore, since a right-hand curve is approaching vehicle 1, the feedforward F/F operation variable $FY_{FF}$ is calculated using $FY^*_{FF} = m\cdot Ks\cdot Vc^2\cdot(1 - COR_R)$. This means that downward correction for addressing the departure risk is applied to the right turning force requested by the feedforward F/F operation variable $FY_{FF}$.

Furthermore, since the vehicle behavior stabilizing yaw moment *Mst* satisfies *Mst* > 0, the vehicle behavior stabilizing yaw moment *Mst* is calculated using $M^*st = Mst\cdot(1 - COR_R)$. This means that downward correction for addressing the departure risk is also applied to the right turning force requested by the vehicle behavior stabilizing yaw moment

*Mst.*

In short, according to this embodiment, no correction for addressing the departure risk is applied to the left turning force requested by the feedback F/B operation variable $FY_{FB}$, whereas downward correction for addressing the departure risk is applied to the right turning forces requested by the feedforward F/F operation variable $FY_{FF}$ and the vehicle behavior stabilizing yaw moment *Mst*. As a result, the requested left turning force increases relative to the requested right turning force, so that vehicle 1 is steered to the left and prevented from departing from the road across the right road edge.

As described above, there may be a situation in which the directions of the turning forces requested by the feedforward F/F operation variable $FY_{FF}$ and the turning force requested by the vehicle behavior stabilizing yaw moment *Mst* are opposite to the direction of the turning force requested by the feedback F/B operation variable $FY_{FB}$, and the magnitude of the total turning force due to the feedforward F/F operation variable $FY_{FF}$ and the vehicle behavior stabilizing yaw moment *Mst* is greater than that of the feedback F/B operation variable $FY_{FB}$. According to this embodiment, in such a situation, motion strategy controller 15 downwardly corrects the vehicle behavior stabilizing yaw moment *Mst* and the feedforward F/F operation variable $FY_{FF}$ in accordance with the departure risk. As a result, vehicle 1 is prevented from departing from the lane due to the high intensity of the vehicle behavior stabilizing yaw moment *Mst.*

Next, how the target steering variable is corrected when vehicle 1 is at the position C and has a tendency to spin clockwise will be described. At the position C, a gentle right-hand curve is approaching vehicle 1.

In this case, the preview point *(Xs, Ys)* is located on the slightly left side of the target point coordinates (*Xp, Yp*), and thus, the feedback F/B operation variable $FY_{FB}$ is set to a value that generates a right turning force. However, since a right-hand curve is approaching vehicle 1, the feedforward F/F operation variable $FY_{FF}$ is also set to a value that generates a right turning force.

In addition, to counteract the clockwise spinning tendency of vehicle 1, the vehicle behavior stabilizing yaw moment *Mst* is set to a negative value that helps vehicle 1 turn left.

Specifically, when vehicle 1 is at the position C, the preview point *(Xs, Ys)* is located close to the center of the drivable width RW, and thus, the lane departure risk of vehicle 1 is sufficiently low. As such, both the departure risks $COR_L$, $COR_R$ are set to zero, and no correction for addressing the departure risks $COR_L$, $COR_R$ is applied to any of the feedback F/B operation variable $FY_{FB}$, the feedforward F/F operation variable $FY_{FF}$, and the vehicle behavior stabilizing yaw moment *Mst*. As a result, vehicle 1 is steered by generating a slight left turning force so as to stabilize the behavior of vehicle 1.

Next, an example of arithmetic processing for calculating departure risks $COR_L$, $COR_R$ performed by departure risk calculation part 360 will be described in detail.

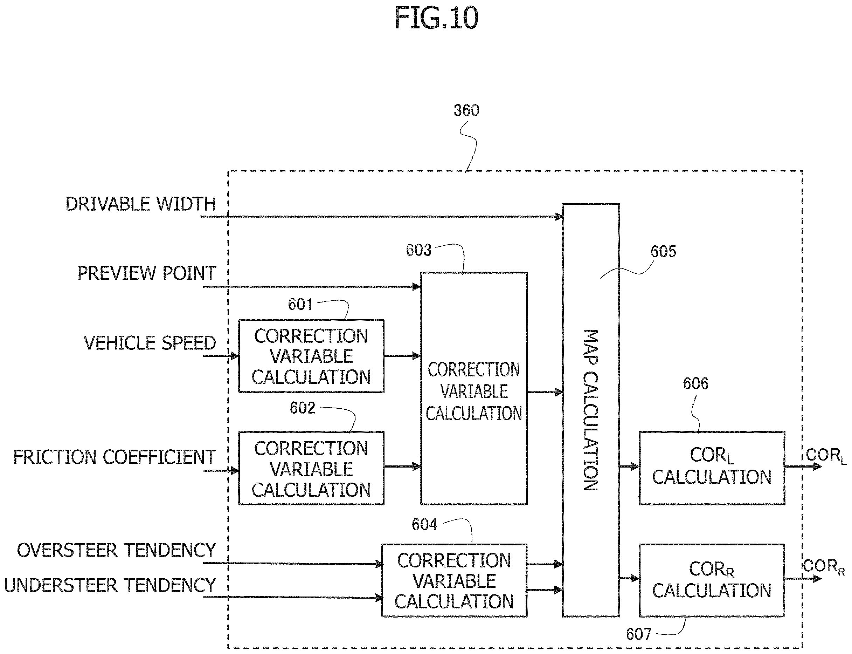

FIG. 10 is a functional block diagram of departure risk calculation part 360.

Departure risk calculation part 360 has functions of: receiving various driving environment-related information on vehicle 1; generating, based on the received information, a risk map describing the distribution of the risk that vehicle 1 may depart from the drivable width RW of a road at a preview point; and calculating, by referring to the thus-generated risk map, the left-edge road departure risk $COR_L$ and the right-edge road departure risk $COR_R$. As described above, the left-edge road departure risk $COR_L$ indicates a risk that vehicle 1 may depart from the road across the left road edge. The right-edge road departure risk $COR_R$ indicates a risk that vehicle 1 may depart from the road across the right road edge.

Specifically, departure risk calculation part 360 includes a vehicle speed-based correction variable calculation part 601, a road surface friction coefficient-based correction variable calculation part 602, a curvature-based correction variable calculation part 603, a behavioral state-based correction variable calculation part 604, a risk map calculation part 605, a left-edge road departure risk calculation part 606, and a right-edge road departure risk calculation part 607.

Next, a general procedure in which risk map calculation part 605 generates a risk map will be described.

When vehicle 1 has no particular driving riskrisk map calculation part 605 generates a risk map so that an area sufficiently far from obstacles (road edges) around vehicle 1 has the minimum risk, in the following manner.

First, risk map calculation part 605 calculates the distance *Lsl* from the left end of the drivable width RW to a minimum risk point MRP at which the departure risk is minimum, and the distance *Lsr* from the right end of the drivable width RW to the minimum risk point MRP, using the following equations.

$$Lsl = m/2$$

$$Lsr = RW - Lsl$$

The distances *Lsl, Lsr* calculated using the above equations satisfy *Lsl = Lsr.* This means that, when vehicle 1 has no particular driving risk, risk map calculation part 605 locates the minimum risk point MRP at the center of the drivable width RW.

Next, risk map calculation part 605 generates a risk distribution (see FIG. 3) such that the departure risk increases exponentially with a decrease in the distance to the left or right road edge from the minimum risk point MRP that is located based on the distances *Lsl, Lsr.*

Specifically, risk map calculation part 605 calculates departure risk values in the risk map, which are normalized to have the maximum value of 1.0, as a function of the distance u by separating the road into the four areas shown in FIG. 3 as follows, where u is the distance from the left edge (used as a reference road edge herein) of the road ($0 \leq u \leq RW$), and a is the parameter for defining how much of the road is covered by an area within which the risk increases exponentially ($0 < a < 1.0$).

For the area defined by $0 \leq u \leq a \cdot Lsl$, that is, the area having the width of $a \cdot Lsl$ and proximal to the left edge of the road, risk map calculation part 605 calculates the departure risk according to Expression 8 of the exponential function.

$$\text{Risk} = \frac{e^u - 1}{e^{a \cdot Lsl} - 1} \qquad \text{(Expression 8)}$$

For the area defined by $a \cdot Lsl < u < Lsl,$ that is, the area having the width of $(1-a) \cdot Lsl$ and lying proximal to the minimum risk point MRP and within the area from the left edge of the road to the minimum risk point MRP, risk map calculation part 605 sets the departure risk to zero.

Similarly, for the area defined by $Lsl < u \leq Lsl + (1-a) \cdot Lsr,$ that is, the area having the width of $(1-a) \cdot Lsr$ and

lying proximal to the minimum risk point MRP and within the area from the minimum risk point MRP to the right edge of the road, risk map calculation part 605 sets the departure risk to zero.

For the area defined by $Lsl + (1-a) \cdot Lsr < u \leq RW$, that is, the area having the width of $a \cdot Lsr$ and proximal to the right edge of the road, risk map calculation part 605 calculates the departure risk according to Expression 9 of the exponential function.

$$\text{Risk} = \frac{e^{(u-(Lsl+(1-a)Lsr))} - 1}{e^{a \cdot Lsr} - 1} \qquad \qquad \text{(Expression 9)}$$

As described above, when vehicle 1 has no particular driving risk, risk map calculation part 605 sets the distances $Lsl, Lsr$ to be equal to each other, thereby locating the minimum risk point MRP at the center of the drivable width RW. Thus, the departure risk values calculated as a function of the distance u as described above has the distribution as shown in FIG. 3.

Specifically, risk map calculation part 605 sets the departure risk to zero in the area within the distance of $(1-a) \cdot Lsl$ from the center (i.e., minimum risk point MRP) of the drivable width $RW$ in the direction toward the left edge of the road as well as in the area within the distance of $(1-a) \cdot Lsr$ from the center (minimum risk point MRP) of the drivable width $RW$ in the direction toward the right edge of the road. In other words, risk map calculation part 605 sets the departure risk to zero in a certain center section, including the minimum risk point MRP, of the drivable width $RW$.

On the other hand, risk map calculation part 605 varies the departure risk in the area separated by the distance of $(1-a) \cdot Lsl$ or more from the center of the drivable width $RW$ in the direction toward the left edge of the road so that the departure risk increases exponentially as the distance from the center of the drivable width $RW$ increases and reaches 1.0 at the left edge of the road.

Similarly, risk map calculation part 605 varies the departure risk in the area separated by the distance of $(1-a) \cdot Lsr$ or more from the center of the drivable width RW in the direction toward the right edge of the road so that the departure risk increases exponentially as the distance from the center of the drivable width RW increases and reaches 1.0 at the right edge of the road.

As described above, when vehicle 1 has no particular driving risk, the distances $Lsl, Lsr$ are set to be equal to each other. Thus, in this case, the risk map has a symmetric risk distribution with respect to the center of the drivable width RW, as shown in FIG. 3.

Departure risk calculation part 360 may calculate the left-edge road departure risk $COR_L$ and the right-edge road departure risk $COR_R$ based on such a risk distribution symmetric in the road width direction. However, departure risk calculation part 360 is further configured to, when vehicle 1 travels on a curve, modify the risk map having a risk distribution symmetric in the road width direction as shown in FIG. 3 so that the departure risk at one of the right and left edges of the road is higher than the other, by taking into account the risk that the controllability of vehicle 1 may decrease in a curve. This allows for reliable and accurate control that prevents lane departure of vehicle 1 and ensures behavioral stability of vehicle 1 in a compatible manner.

Hereinafter, processing for modifying the risk map performed by departure risk calculation part 360 when vehicle 1 travels on a curve will be described.

Departure risk calculation part 360 has a function of modifying the risk map based on the vehicle speed Vc, the friction coefficient $\mu$ of the road surface, and the road curvature Ks when vehicle 1 travels on a curve.

When a vehicle travels on a curve, the greater the road curvature $Ks$, the higher the vehicle speed Vc, and/or the lower the friction coefficient $\mu$ of the road surface, the more likely the vehicle will fail to negotiate an approaching curve. Accordingly, the vehicle is likely to follow a path less sharply curved than the approaching curve, and turn more outward to depart from the curve. Thus, departure risk calculation part 360 reflects such tendency in the risk map when vehicle 1 travels on a curve.

First, vehicle speed-based correction variable calculation part 601 calculates a first adjustment gain $Gvc$ ($1 \leq Gvc < 2$) based on the vehicle speed Vc of vehicle 1.

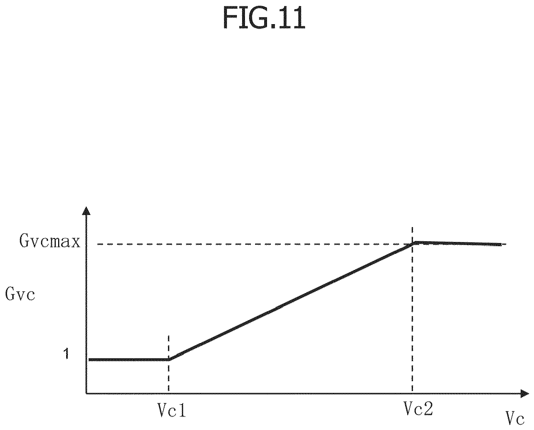

The first adjustment gain $Gvc$ is set to a greater value as the vehicle speed Vc is higher. For example, as shown in FIG. 11, the first adjustment gain Gvc is fixed at 1.0 in a range in which the vehicle speed Vc is equal to or less than a first speed threshold Vc1, gradually increases as the vehicle speed Vc increases above the first speed threshold Vc1, and is fixed at a maximum value $Gvcmax$ ($1 < Gvcmax < 2$) in a range in which the vehicle speed $Vc$ is equal to or higher than a second speed threshold $Vc2$ ($Vc2 > Vc1$).

Then, road surface friction coefficient-based correction variable calculation part 602 calculates a second adjustment gain $G\mu$ ($1 \leq G\mu < 2$) based on the friction coefficient $\mu$ of the road surface with which the wheels of vehicle 1 are in contact. The friction coefficient $\mu$ of the road surface at least partially constitutes the driving environment-related information regarding a driving environment ahead of vehicle 1.

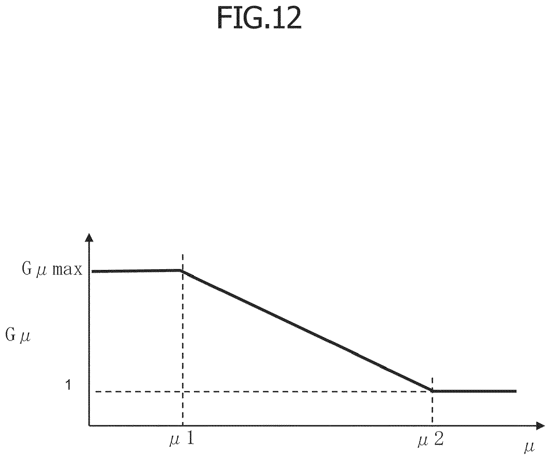

The second adjustment gain $G\mu$ is set to a greater value as the friction coefficient $\mu$ of the road surface is lower; in other words, as the road surface is more slippery. For example, as shown in FIG. 12, the second adjustment gain $G\mu$ is fixed at a maximum value $G\mu max$ ($1 < G\mu max < 2$) in a range in which the friction coefficient $\mu$ is equal to or less than a first friction coefficient threshold $\mu_1$, gradually increases as the friction coefficient $\mu$ increases above the friction coefficient threshold $\mu1$, and is fixed at 1.0 in a range in which the friction coefficient $\mu$ is equal to or higher than a second friction coefficient threshold $\mu2$ ($\mu2 > \mu1$).

Then, curvature-based correction variable calculation part 603 receives the first adjustment gain $Gvc$ calculated by vehicle speed-based correction variable calculation part 601 and the second adjustment gain $G\mu$. calculated by road surface friction coefficient-based correction variable calculation part 602, and performs an operation (select-high operation) for selecting the greater of the first adjustment gain $Gvc$ and the second adjustment gain $G\mu$. Curvature-based correction variable calculation part 603 sets the selected value to a third adjustment gain $Gmax$ ($Gmax$ = max ($Gvc$, $G\mu$)).

Then, curvature-based correction variable calculation part 603 calculates a fourth adjustment gain $Gks$ based on the third adjustment gain $Gmax$ and the road curvature $Ks$ at the preview point $(Xs, Ys)$.

Here, the road curvature Ks at least partially constitutes the driving environment-related information regarding the driving environment ahead of vehicle 1, and is calculated based on the external environment information.

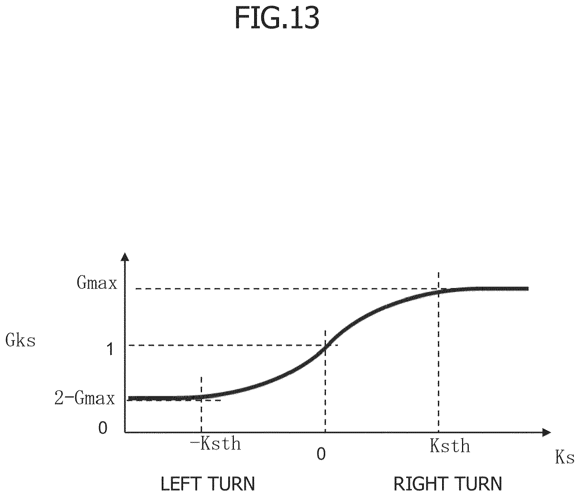

Curvature-based correction variable calculation part 603 generates a map as shown, for example, in FIG. 13 based on the third adjustment gain $Gmax$, and determines the fourth adjustment gain $Gks$ with reference to this map.

As described above, in this embodiment, a negative value of the road curvature Ks indicates a left-hand road curvature, and a positive value of the road curvature Ks indicates a right-hand road curvature.

Accordingly, a negative value and a positive value of the road curvature Ks in the map shown in FIG. 13 correspond respectively to a left-hand curve and a right-hand curve. As such, in the map shown in FIG. 13, the fourth adjustment $Gks$ is set to 1.0 when the curvature $Ks$ is zero and indicates a straight road, the fourth adjustment $Gks$ increases above 1.0 as the road curvature Ks increases above 0 (as the right-hand road curvature increases), and the fourth adjustment $Gks$ decreases below 1.0 as the road curvature Ks decreases below 0 (as the left-hand road curvature increases).

Furthermore, in the map shown in FIG. 13, the fourth adjustment gain $Gks$ is set to be equal to the third adjustment gain $Gmax$ in a range in which the road curvature Ks is greater than a curvature threshold $Ksth$ ($Ksth > 0$) (when the right-hand road curvature is greater than a threshold), and the fourth adjustment gain $Gks$ is set to be equal to "2 - $Gmax$" in a range in which the road curvature Ks is less than the curvature threshold "$Ksth \times -1$" (when the left-hand road curvature is greater than the threshold).

In other words, the fourth adjustment gain $Gks$ varies within the range between "$Gmax$" and "2 - $Gmax$" so that the fourth adjustment gain $Gks$ is 1.0 when the road curvature $Ks$ is zero, varies toward the third adjustment gain $Gmax$ as the road curvature Ks shifts to the positive side, and varies toward "2 - $Gmax$" as the road curvature Ks shifts to the negative side.

As described above, the third adjustment gain $Gmax$ is set to the greater of the first adjustment gain $Gvc$ calculated based on the vehicle speed $Vc$ and the second adjustment gain $G\mu$ calculated based on the friction coefficient $\mu$ of the road surface.

Accordingly, assuming that the road curvature $Ks$ is the same, the fourth adjustment gain $Gks$ for a right-hand turn is set to a greater value as the vehicle speed Vc is higher and the friction coefficient $\mu$ is smaller. On the other hand, assuming that the road curvature $Ks$ is the same, the fourth adjustment gain $Gks$ for a left turn is set to a smaller value as the vehicle speed Vc is higher and the friction coefficient $\mu$ is smaller.

Then, risk map calculation part 605 calculates the distance $Lsl$ from the left edge of the road to the minimum risk point MRP and the distance $Lsr$ from the right edge of the road to the minimum risk point MRP, by applying the thus-calculated fourth adjustment gain $Gks$ to the following equations.

$$Lsl = RW \cdot Gks/2$$

$$Lsr = RW - Lsl$$

Thus, for example, when vehicle 1 turns right, and thus, the fourth adjustment gain $Gks$ is set to a value greater than 1.0, the risk map is modified as follows. In this case, the minimum risk point MRP is shifted to the right (i.e., toward the inside of the turn) from the center of the drivable width RW, and thus, the distance $Lsl$ from the left edge of the road to the minimum risk point MRP is increased. Accordingly, in this case, based on these distances $Lsl, Lsr,$ the risk map is modified such that the departure risk on the outside of the turn is greater than on the inside of the turn.

In other words, when vehicle 1 turns right, the risk map is modified such that the departure risk on the outside of the turn is greater than on the inside of the turn by shifting the minimum risk point MRP from the center of the drivable width RW toward the right edge of the road (toward the inside of the turn) by a greater distance as the road curvature Ks is greater, the vehicle speed Vc is higher, and the friction coefficient $\mu$ of the road surface is lower.

On the other hand, when vehicle 1 turns left, and thus, the fourth adjustment gain *Gks* is set to a value less than 1.0, the risk map is modified as follows. In this case, the minimum risk point MRP is shifted to the left (i.e., toward the inside of the turn) from the center of the drivable width RW, and thus, the distance *Lsl* from the left edge of the road to the minimum risk point MRP is reduced. Accordingly, in this case, based on these distances *Lsl, Lsr*, the risk map is modified such that the departure risk on the outside of the turn is greater than on the inside of the turn.

In other words, when vehicle 1 turns left, the risk map is modified such that the departure risk on the outside of the turn is greater than on the inside of the turn by shifting the minimum risk point MRP from the center of the drivable width RW toward the left edge of the road by a greater distance as the road curvature *Ks* is greater, the vehicle speed Vc is higher, and the friction coefficient $\mu$ of the road surface is lower.

As already described, when a vehicle travels on a curve, as the road curvature Ks is greater, the vehicle speed Vc is higher, and/or as the friction coefficient $\mu$ of the road surface is lower, a sufficient turning force is less likely to be generated in the vehicle and the vehicle is more likely to turn more outward and depart from the curve.

In view of this, departure risk calculation part 360 shifts the minimum risk point MRP from the center of the drivable width RW by a greater distance toward the inside of the turn as the road curvature *Ks* is greater, the vehicle speed Vc is higher, and/or the friction coefficient $\mu$ of the road surface is lower so that the departure risk on the outside of the turn is set greater than on the inside of the turn.

In other words, when vehicle 1 goes straight, departure risk calculation part 360 locates the minimum risk point MRP at the center of the drivable width RW and calculates departure risk values such that the departure risk increases toward the left and right road edge lines with respect to the minimum risk point MRP. On the other hand, when vehicle 1 turns a curve, departure risk calculation part 360 shifts the minimum risk point MRP from the center of the drivable width RW to the left or to the right depending on the driving environment of the curve and calculates departure risk values such that the departure risk increases to the left and right of the drivable width RW with respect to the thus-shifted minimum risk point MRP.

This enables automatic steering for preventing vehicle 1 from travelling along a course with a high potential risk of lane departure, and thus, more reliably ensures safety of vehicle 1 by taking into account the risk that the controllability of vehicle 1 may decrease when vehicle 1 turns.

Departure risk calculation part 360 also has a function of correcting the distances *Lsl, Lsr* that have been calculated based on the fourth adjustment gain *Gks,* in accordance with the behavioral state of vehicle 1, specifically, whether vehicle 1 has an oversteer tendency and whether vehicle 1 has an understeer tendency.

A vehicle with an oversteer tendency tends to turn more sharply than intended and may turn more inward than the intended turn to depart from the road. Thus, if vehicle 1 has an oversteer tendency and only a turning force less than that required is generated in vehicle 1 when vehicle 1 turns, vehicle 1 is likely to turn more inward than intended and to depart from the lane.

Accordingly, it is reasonably effective to downwardly correct the departure risk on the outside of the turn and upwardly correct the departure risk on the inside of the turn when vehicle 1 has an oversteer tendency as compared to when vehicle 1 has no tendency to oversteer, in order to prevent vehicle 1 from turning more inward than intended and departing from the lane.

On the other hand, a vehicle with an understeer tendency tends to turn less sharply than intended and may turn more outward than the intended turn to depart from the road. Thus, if vehicle 1 has an understeer tendency and only a turning force less than that required is generated in vehicle 1 when vehicle 1 turns, vehicle 1 is likely to turn more outward than intended and to depart from the lane.

Accordingly, it is reasonably effective to downwardly correct the departure risk on the inside of the turn and upwardly correct the departure risk on the outside of the turn when vehicle 1 has an understeer tendency as compared to when vehicle 1 has no tendency to understeer, in order to prevent vehicle 1 from turning more outward than intended and departing from the lane.

For this purpose, behavioral state-based correction variable calculation part 604 calculates a correction term *Uns* for the risk map in accordance with a request for setting a risk associated with an understeer/oversteer tendency, and risk map calculation part 605 calculates the distances *Lsl, Lsr* by applying the thus-calculated correction term *Uns* and the fourth adjustment gain *Gks* to the following equations.

$$Lsl = RW \cdot (Gks/2 + Uns)$$

$$Lsr = RW - Lsl$$

, provided that $0 < (Gks/2 + Uns) < 1.0$.

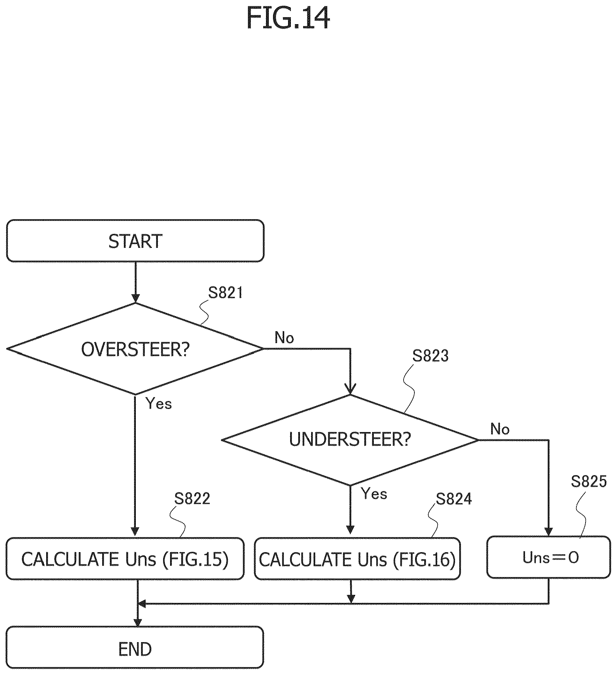

FIG. 14 is a flowchart of a procedure for calculating the correction term *Uns* performed by behavioral state-based correction variable calculation part 604.

In step S821, behavioral state-based correction variable calculation part 604 determines whether vehicle 1 has an oversteer tendency based on received oversteer-related information, which at least partially constitutes the behavioral state-related information on vehicle 1.

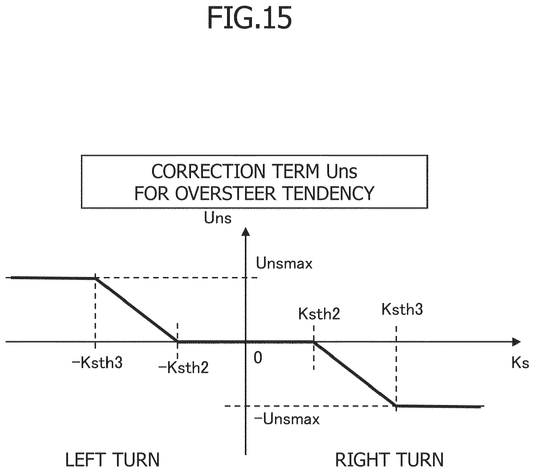

When behavioral state-based correction variable calculation part 604 determines that vehicle 1 has an oversteer tendency, the operation proceeds to step S822. In step S822, with reference to a map as shown, for example, in FIG. 15, behavioral state-based correction variable calculation part 604 calculates the correction term *Uns* for correcting the risk map in accordance with the oversteer tendency.

The map of the correction term *Uns* in FIG. 15 shows the correlation between the road curvature *Ks* and the correction term *Uns* for vehicle 1 with an oversteer tendency. In the map of FIG. 15, the correction term *Uns* is set to zero in a range in which the absolute value of the road curvature Ks is equal to or less than a threshold *Ksth2*, and thus, a substantially straight road is assumed. In a range of the road curvature *Ks* in which a right-hand curve is assumed, the correction term *Uns* is set to a negative value of which the absolute value increases as the absolute value of the road curvature Ks increases. In a range of the road curvature *Ks* in which a left-hand curve is assumed, the correction term *Uns* is set to a positive value of which the absolute value increases as the absolute value of the road curvature Ks increases. However, the absolute value of the correction term *Uns* is fixed to a constant value |*Unsmax*| in the ranges in which the absolute value of the road curvature *Ks* is equal to or greater than a threshold *Ksth3*.

Assume a case in which vehicle 1 exhibits an oversteer tendency while it turns left, as an example. In this case, behavioral state-based correction variable calculation part 604 sets the correction term *Uns* to a positive value greater than zero. This increases the distance *Lsl* and thus, shifts the minimum risk point MRP toward the outside of the turn, as compared to when vehicle 1 exhibits no tendency to oversteer.

As a result, in the risk map based on this minimum risk point MRP, the departure risk on the outside of the turn is corrected downward and the departure risk on the inside of the turn is corrected upward as compared to when vehicle 1 exhibits no tendency to oversteer. Thus, this modified risk map allows preventing vehicle 1 from turning more inward than intended and departing from the lane.

When behavioral state-based correction variable calculation part 604 determines that vehicle 1 has no tendency to oversteer in step S821, the operation proceeds to step S823. In step S823, behavioral state-based correction variable calculation part 604 determines whether vehicle 1 has an understeer tendency based on received understeer-related information, which at least partially constitutes the behavioral state-related information on vehicle 1.

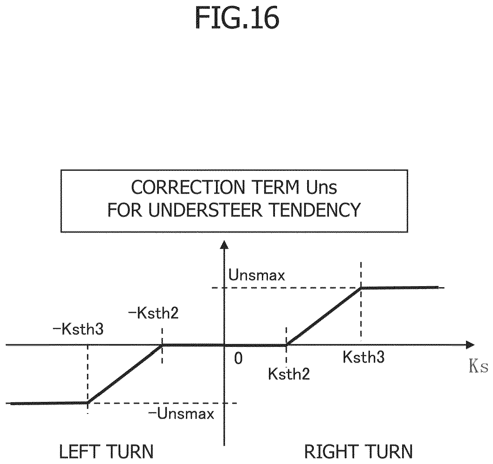

When behavioral state-based correction variable calculation part 604 determines that vehicle 1 has an understeer tendency, the operation proceeds to step S824. In step S824, with reference to a map as shown, for example, in FIG. 16, behavioral state-based correction variable calculation part 604 calculates the correction term *Uns* for correcting the risk map in accordance with the understeer tendency.

The map of the correction term *Uns* in FIG. 16 shows the correlation between the road curvature *Ks* and the correction term *Uns* for vehicle 1 with an understeer tendency. In the map of FIG. 16, the correction term *Uns* is set to zero in a range in which the absolute value of the road curvature *Ks* is equal to or less than the threshold *Ksth2*, and thus, a substantially straight road is assumed. In a range of the road curvature Ks in which a right-hand curve is assumed, the correction term *Uns* is set to a positive value of which the absolute value increases as the absolute value of the road curvature Ks increases. In a range of the road curvature *Ks* in which a left-hand curve is assumed, the correction term *Uns* is set to a negative value of which the absolute value increases as the absolute value of the road curvature Ks increases.

Assume a case in which vehicle 1 exhibits an understeer tendency while it turns left, as an example. In this case, behavioral state-based correction variable calculation part 604 sets the correction term *Uns* to a negative value less than zero. This reduces the distance *Lsl* and thus, shifts the minimum risk point MRP toward the inside of the turn, as compared to when vehicle 1 exhibits no tendency to understeer.

As a result, in the risk map based on this minimum risk point MRP, the departure risk on the outside of the turn is corrected upward and the departure risk on the inside of the turn is corrected downward as compared to when vehicle 1 exhibits no tendency to understeer. Thus, this modified risk map allows preventing vehicle 1 from turning more outward than intended and departing from the lane.

When behavioral state-based correction variable calculation part 604 determines that vehicle 1 has no tendency to understeer in step S823, the operation proceeds to step S825. In step S825, behavioral state-based correction variable calculation part 604 sets the correction term *Uns* to zero.

Here, behavioral state-based correction variable calculation part 604 sets the correction term *Uns* to zero in step S825 since it is not necessary to modify the risk map based on the behavioral state of vehicle 1 when vehicle 1 has no tendency to oversteer or understeer.

In this way, curvature-based correction variable calculation part 603 calculates the fourth adjustment gain *Gks*

in accordance with the road curvature Ks, the vehicle speed Vc, and the friction coefficient $\mu$ of the road surface, and behavioral state-based correction variable calculation part 604 calculates the correction term *Uns* in accordance with the oversteer/understeer tendency (behavioral state) of vehicle 1.

Furthermore, risk map calculation part 605 calculates the distances *Lsl, Lsr* using the thus-calculated fourth adjustment gain *Gks* and the correction term *Uns* as described above. Then, using the thus-calculated distances *Lsl, Lsr,* risk map calculation part 605 generates a risk map having a risk distribution in which the departure risk exponentially increases toward the left end of the drivable width RW in the area defined by $0 \leq u \leq a \cdot Lsl$ and also exponentially increases toward the right end of the drivable width RW in the area defined by $Lsl + (1\text{-}a) \cdot Lsr < u \leq RW.$

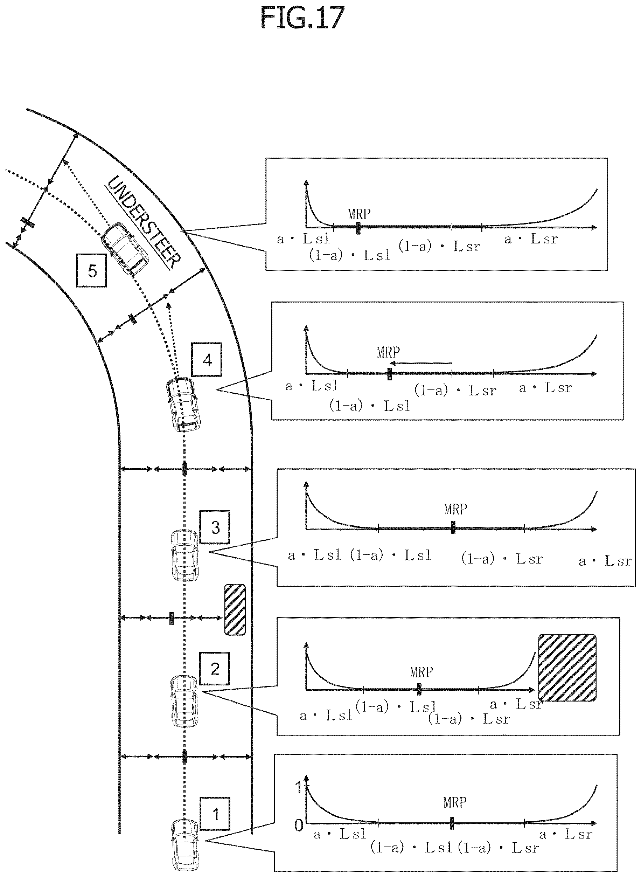

FIG. 17 shows an example for illustrating how the risk map transitions in accordance with the driving conditions of vehicle 1.

When vehicle 1 is traveling at a first point (indicated by "1" in a square box in FIG. 17, the same applies to second to fifth points below), vehicle 1 is on a straight road. Accordingly, the minimum risk point MRP is located at the center of the drivable width RW (equivalent to the lane width) of the road and a risk map having a symmetric risk distribution with respect to the minimum risk point MRP is generated and used.

When vehicle 1 is traveling at a second point, vehicle 1 is on the same straight road but an obstacle appears ahead of vehicle 1 on the right. In this case, the minimum risk point MRP is located at the center of the drivable width RW that does not include the lane width occupied by the obstacle, and a risk map having a symmetric risk distribution with respect to this minimum risk point MRP is generated and used.

When vehicle 1 is traveling at a third point, the obstacle partially occupying the lane width on the right of vehicle 1 has disappeared. Accordingly, the minimum risk point MRP is located again at the center of the original drivable width RW (equivalent to the lane width) and a risk map having a symmetric risk distribution with respect to the minimum risk point MRP is generated and used.

When vehicle 1 is traveling at a fourth point, a left-hand curve is approaching vehicle 1. Accordingly, the minimum risk point MRP is shifted toward the inside of the turn from the center of the drivable width RW in accordance with the curvature *Ks* of the left-hand curve, and a risk map modified such that the departure risk on the inside of the turn is less than on the outside of the turn is generated and used.

When vehicle 1 is traveling at a fifth point, vehicle 1 exhibits an understeer tendency. Accordingly, the minimum risk point MRP that has been shifted in accordance with the curvature *Ks* of the left-hand curve is further shifted toward the inside of the turn, and a risk map modified such that the departure risk on the inside of the turn is further reduced to be much less than on the outside of the turn is generated and used.

In this manner, the risk map is modified in accordance with the driving environment of a curve approaching vehicle 1. Assume here a case in which, after vehicle 1 travels on a straight road having a first drivable width, vehicle 1 enters a curved road having a second drivable width at a predetermined speed or more, and the first drivable width is equal to the second drivable width, as an example. In this case, the risk distribution of the risk map is modified from a risk distribution symmetric in the road width direction, which is adapted to the straight road (corresponding to the risk map at third point in FIG. 17) to a risk distribution in which the minimum risk point MRP is shifted toward the inside of the turn by taking into account the departure risk on the outside of the turn (corresponding to the risk map at fourth or fifth point in FIG. 17). Based on the modified risk map, vehicle 1 is steered so as to separate from the road edge on the outside, with a higher departure risk, of the turn.

That is, even if a straight road and a curved road that follows the straight road have the same drivable width, the minimum risk point MRP is located at the different positions (thus, risk distribution varies) between the risk map generated for the straight road and the risk map generated for the curved road. As a result, the position of vehicle 1 in the road width direction when vehicle 1 travels on the straight road and the position of vehicle 1 in the road width direction when vehicle 1 travels on the curved road are both within the drivable width RW but differ from each other.

Therefore, according to this embodiment, it is possible to more reliably ensure safety of vehicle 1 by taking into account the risk that the controllability of vehicle 1 may decrease in a curved road.

Next, arithmetic processing for calculating departure risks $COR_L$, $COR_R$ performed by departure risk calculation parts 606, 607 will be described in detail.

Based on the risk map calculated by risk map calculation part 605, left-edge road departure risk calculation part 606 and right-edge road departure risk calculation part 607 calculate the departure risks $COR_L$, $COR_R$.

Departure risk calculation parts 606, 607 calculate a distance hs from the preview point (Xs, *Ys)* to the left edge of the road, and calculate the departure risks $COR_L$, $COR_R$ under the current driving conditions of vehicle 1 by assigning the distance *hs* to the input variable u of the risk map function.

For example, when the distance hs satisfies $0 \leq hs \leq a \cdot Lsl$, departure risk calculation parts 606, 607 calculate the left-edge road departure risk $COR_L$ and the right-edge road departure risk $COR_R$ using Expressions 10 below.

$$COR_L = \frac{e^{hs} - 1}{e^{a \cdot Lsl} - 1}$$

$$COR_R = 0 \qquad \text{(Expressions 10)}$$

When the distance *hs* satisfies *Lsl* + (1-*a*)·*Lsr* < *hs* ≤ *RW,* departure risk calculation parts 606, 607 calculate the left-edge road departure risk $COR_L$ and the right-edge road departure risk *CORR* using Expressions 11 below.

$$COR_L = 0$$

$$COR_R = \frac{e^{(hs-(Lsl+(1-a)Lsr))} - 1}{e^{a \cdot Lsr} - 1} \qquad \text{(Expressions 11)}$$

When the distance *hs* satisfies *a*·*Lsl* < *hs* <*Lsl* or *Lsl* < *hs* ≤ *Lsl* + (1-*a*)·*Lsr,* departure risk calculation parts 606, 607 set both the left-edge road departure risk $COR_L$ and the right-edge road departure risk $COR_R$ to zero.

Action strategy controller 14 calculates the left-edge road departure risk $COR_L$ and the right-edge road departure risk $COR_R$ in this manner, and motion strategy controller 15 corrects the turning force for lane keeping based on the thus-calculated departure risks $COR_L$, $COR_R$.

The technical concepts described in the above embodiment may be used in combination with each other as necessary, as long as no conflict arises.

Although the present invention has been described in detail with reference to the preferred embodiment, it is apparent that the above embodiment may be modified in various forms by one skilled in the art based on the fundamental technical concepts and teachings of the present invention.

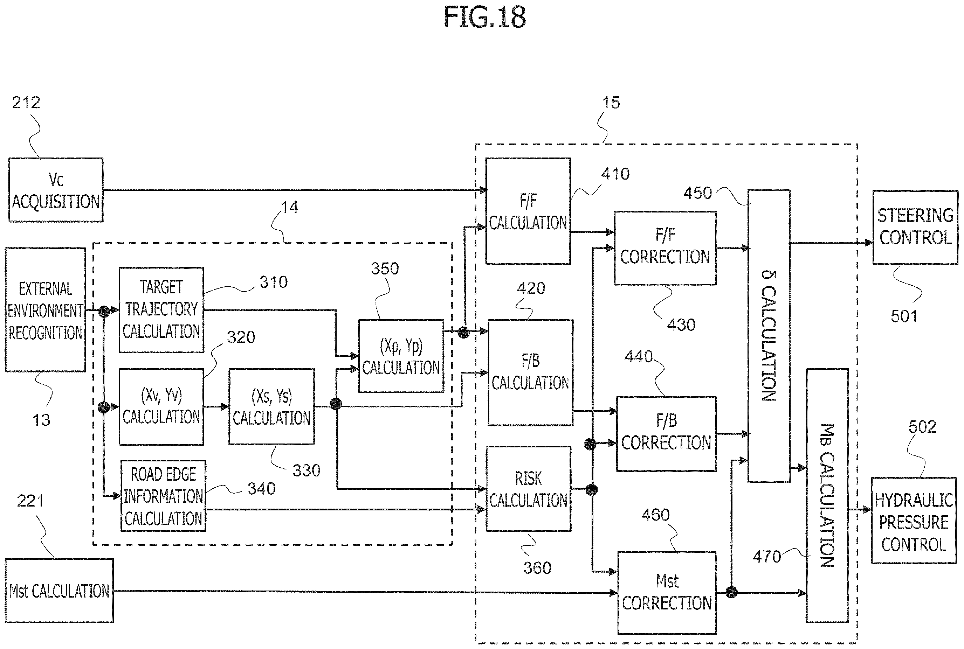

For example, in the driver assistance system shown in FIG. 2, action strategy controller 14, which corresponds to the first unit, has a function to serve as departure risk calculation part 360, and action strategy controller 14 is configured to transmit the departure risk-related information determined by departure risk calculation part 360 to motion strategy controller 15, which corresponds to the second unit and has a function to serve as the actuator operation variable calculation part. Alternatively, however, motion strategy controller 15, which has a function to serve as the actuator operation variable calculation part, may include departure risk calculation part 360, as shown in FIG. 18.

In the driver assistance system shown in FIG. 18, the driving environment-related information, such as road edge information, acquired by the external environment recognition part; i.e., various information for calculating the departure risks $COR_L$, $COR_R$, are transmitted from action strategy controller 14 to motion strategy controller 15 through a communication line. Departure risk calculation part 360 in motion strategy controller 15 calculates the departure risks based on the received information.

That is, in the driver assistance system of FIG. 18, a single unit, i.e., motion strategy controller 15, includes both the functions to serve as the departure risk calculation part and the actuator operation variable calculation part.

Still alternatively, the multiple functional blocks of departure risk calculation part 360 shown in FIG. 10 may be allocated between action strategy controller 14 and motion strategy controller 15.

For example, action strategy controller 14 may include vehicle speed-based correction variable calculation part 601, road surface friction coefficient-based correction variable calculation part 602, curvature-based correction variable calculation part 603, behavioral state-based correction variable calculation part 604, and risk map calculation part 605, and motion strategy controller 15 may include left-edge road departure risk calculation part 606 and right-edge road departure risk calculation part 607. In this modification, action strategy controller 14 is configured to transmit the risk map-related information to motion strategy controller 15.

Furthermore, it is apparent that the method for generating or modifying the risk map is not limited to that described in the above embodiment, but may be implemented in various modified forms.

For example, departure risk calculation part 360 may generate a risk map in which the minimum risk point MRP is located at the center of the drivable width RW as shown in FIG. 3, also when vehicle 1 travels on a curve.

Alternatively or additionally, when shifting the minimum risk point MRP to the left or to the right depending on the driving environment, departure risk calculation part 360 may modify the risk map based on the road curvature alone or based on the road curvature and at least one of the vehicle speed, the friction coefficient of a road surface, and the steering characteristic (oversteer/understeer tendency).

Alternatively or additionally, departure risk calculation part 360 may be configured to shift the minimum risk point MRP in accordance with an angle of transverse inclination of the road or the like.

Assume here a case in which vehicle 1 travels on a curve transversely inclined such that the road level on the inside of the turn is lower than the road level on the outside of the turn, and a case in which vehicle 1 travels on a curve having the same road curvature as this transversely inclined curve but no transverse inclination. In the former case, even if departure risk calculation part 360 may downwardly correct the risk on the outside of the turn by a greater amount than in the latter case, the safety of the vehicle may be ensured.

REFERENCE SYMBOL LIST

| | |
|---|---|
| 1 | Vehicle |
| 10 | Wheel cylinder hydraulic pressure control device |
| 12 | Steering device |
| 13 | External environment recognition control unit (External environment recognition part) |
| 14 | Action strategy controller (Driver assistance device) |
| 15 | Motion strategy controller (Driver assistance device) |
| 200 | Driver assistance system |
| 212 | Vehicle speed acquisition part |
| 221 | Yaw moment calculation part |
| 310 | Target trajectory calculation part |
| 360 | Departure risk calculation part |
| 450 | Target steering variable calculation part |
| 470 | Braking moment calculation part |
| 501 | Steering variable control part |
| 502 | Hydraulic pressure control part |

**Claims**

1. A driver assistance system (200) configured to:

receive a target trajectory of a vehicle determined based on driving environment-related information regarding a driving environment ahead of the vehicle, the driving environment-related information being acquired by an external environment recognition part (13);
determine, based on the driving environment-related information, a departure risk ($COR_L$, $COR_R$) of the vehicle departing from a drivable width of a road on which the vehicle travels;
determine, as actuator operation variable-related information regarding an operation variable of an actuator related to a steering and/or braking/driving operation that causes the vehicle to travel along the target trajectory, a feedforward operation variable ($FY_{FF}$) based on a road curvature, the road curvature at least partially constituting the driving environment-related information regarding the driving environment ahead of the vehicle acquired by the external environment recognition part (13); a feedback operation variable ($FY_{FB}$) based on a difference between a target position of the vehicle that ensures that the vehicle travels along the target trajectory and a preview position of the vehicle determined based on the driving environment-related information regarding the driving environment ahead of the vehicle acquired by the external environment recognition part (13); and a vehicle stabilizing moment operation variable (Mst) for applying, to the vehicle, a moment based on the braking operation of a brake device configured to apply a braking force to the vehicle, the brake device at least partially constituting the actuator;
downwardly correct the vehicle stabilizing moment operation variable (Mst) in accordance with the departure risk ($COR_L$, $COR_R$), when directions of movement requested by the feedforward operation variable ($FY_{FF}$) and movement requested by the vehicle stabilizing moment operation variable (Mst) are opposite to a direction of movement requested by the feedback operation variable ($FY_{FB}$), and a total amount of the movements requested by the feedforward operation variable ($FY_{FF}$) and the vehicle stabilizing moment operation variable (Mst) is greater than an amount of the movement requested by the feedback operation variable ($FY_{FB}$); and
output the actuator operation variable-related information to the actuator.

2. The driver assistance system (200) according to claim 1, wherein the driver assistance device is configured to downwardly correct the feedforward operation variable ($FY_{FF}$) in accordance with the departure risk ($COR_L$, $COR_R$).

3. The driver assistance system (200) according to claim 1, wherein the departure risk ($COR_L$, $COR_R$) is information on a risk distribution within the drivable width determined based on information on a curve on which the vehicle travel which at least partially constitutes the driving environment-related information regarding the driving environment ahead of the vehicle acquired by the external environment recognition part (13).

4. A driver assistance system (200) configured to:

receive a target trajectory of a vehicle determined based on driving environment-related information regarding a driving environment ahead of the vehicle, the driving environment-related information being acquired by an external environment recognition part (13);

determine, based on the driving environment-related information, a departure risk ($COR_L$, $COR_R$) of the vehicle departing from a drivable width of a road on which the vehicle travels;

determine, as actuator operation variable-related information regarding an operation variable of an actuator related to a steering and/or braking/driving operation that causes the vehicle to travel along the target trajectory, a feedforward operation variable ($FY_{FF}$) based on a road curvature, the road curvature at least partially constituting the driving environment-related information regarding the driving environment ahead of the vehicle acquired by the external environment recognition part (13); and a feedback operation variable (FYFB) based on a difference between a target position of the vehicle that ensures that the vehicle travels along the target trajectory and a preview position of the vehicle determined based on the driving environment-related information regarding the driving environment ahead of the vehicle acquired by the external environment recognition part (13);

downwardly correct the feedforward operation variable ($FY_{FF}$) in accordance with the departure risk ($COR_L$, $COR_R$) , when a direction of movement requested by the feedforward operation variable ($FY_{FF}$) is opposite to a direction of movement requested by the feedback operation variable ($FY_{FB}$), and an amount of the movement requested by the feedforward operation variable ($FY_{FF}$) is greater than an amount of the movement requested by the feedback operation variable ($FY_{FB}$); and

output the actuator operation variable-related information to the actuator.

5. The driver assistance system (200) according to claim 4, wherein the departure risk ($COR_L$, $COR_R$) is information on a risk distribution within the drivable width determined based on information on a curve on which the vehicle travels which at least partially constitutes the driving environment-related information regarding the driving environment ahead of the vehicle acquired by the external environment recognition part (13).

6. A driver assistance method comprising:

receiving a target trajectory of a vehicle calculated based on driving environment-related information regarding a driving environment ahead of the vehicle, the driving environment-related information being acquired by an external environment recognition part (13);

determining, based on the driving environment-related information, a departure risk of the vehicle departing from a drivable width of a road on which the vehicle travels;

determining, as actuator operation variable-related information regarding an operation variable of an actuator related to a steering and/or braking/driving operation that causes the vehicle to travel along the target trajectory, a feedforward operation variable ($FY_{FF}$) based on a road curvature, the road curvature at least partially constituting the driving environment-related information regarding the driving environment ahead of the vehicle acquired by the external environment recognition part (13); a feedback operation variable ($FY_{FB}$) based on a difference between a target position of the vehicle that ensures that the vehicle travels along the target trajectory and a preview position of the vehicle determined based on the driving environment-related information regarding the driving environment ahead of the vehicle acquired by the external environment recognition part (13); and a vehicle stabilizing moment operation variable (Mst) for applying, to the vehicle, a moment based on the braking operation of a brake device configured to apply a braking force to the vehicle, the brake device at least partially constituting the actuator;

downwardly correcting the vehicle stabilizing moment operation variable (Mst) in accordance with the departure risk ($COR_L$, $COR_R$), when directions of movement requested by the feedforward operation variable ($FY_{FF}$) and movement requested by the vehicle stabilizing moment operation variable (Mst) are opposite to a direction of movement requested by the feedback operation variable ($FY_{FB}$), and a total amount of the movements requested by the feedforward operation variable ($FY_{FF}$) and the vehicle stabilizing moment operation variable (Mst) is greater than an amount of the movement requested by the feedback operation variable ($FY_{FB}$); and

outputting the actuator operation variable-related information to the actuator.

7. A driver assistance method comprising:

receiving a target trajectory of a vehicle determined based on driving environment-related information regarding a driving environment ahead of the vehicle, the driving environment-related information being acquired by an external environment recognition part (13);

determining, based on the driving environment-related information, a departure risk ($COR_L$, $COR_R$) of the vehicle departing from a drivable width of a road on which the vehicle travels;

determining, as actuator operation variable-related information regarding an operation variable of an actuator related to a steering and/or braking/driving operation that causes the vehicle to travel along the target trajectory, a feedforward operation variable ($FY_{FF}$) based on a road curvature, the road curvature at least partially constituting the driving environment-related information regarding the driving environment ahead of the vehicle acquired by the external environment recognition part (13); and a feedback operation variable ($FY_{FB}$) based on a difference between a target position of the vehicle that ensures that the vehicle travels along the target trajectory and a preview position of the vehicle determined based on the driving environment-related information regarding the driving environment ahead of the vehicle acquired by the external environment recognition part (13);

downwardly correcting the feedforward operation variable ($FY_{FF}$) in accordance with the departure risk ($COR_L$, $COR_R$), when a direction of movement requested by the feedforward operation variable ($FY_{FF}$) is opposite to a direction of movement requested by the feedback operation variable ($FY_{FB}$), and an amount of the movement requested by the feedforward operation variable ($FY_{FF}$) is greater than an amount of the movement requested by the feedback operation variable ($FY_{FB}$); and

outputting the actuator operation variable-related information to the actuator.

**Patentansprüche**

1. Fahrerassistenzsystem (200), das konfiguriert ist, zum:

Empfangen einer Zieltrajektorie eines Fahrzeugs, die basierend auf fahrumgebungsbezogenen Informationen bezüglich einer Fahrumgebung vor dem Fahrzeug festgestellt wurde, wobei die fahrumgebungsbezogenen Informationen von einem Außenumgebungserkennungsabschnitt (13) erfasst wurden;

Feststellen, basierend auf den fahrumgebungsbezogenen Informationen, eines Abfahrtsrisikos ($COR_L$, $COR_R$) des Fahrzeugs, das von einer befahrbaren Breite einer Straße, auf der das Fahrzeug fährt, abweicht;

Feststellen, als Aktuatorbetätigungsvariablenbezogene Informationen bezüglich einer Betätigungsvariablen eines Aktuators, die sich auf eine Lenk- und/oder Brems- /Fahrbetätigung bezieht, die bewirkt, dass das Fahrzeug entlang der Zieltrajektorie fährt, einer Vorwärts-Betätigungsvariablen ($FY_{FF}$) basierend auf einer Straßenkrümmung, wobei die Straßenkrümmung zumindest teilweise die fahrumgebungsbezogenen Informationen bezüglich der Fahrumgebung vor dem Fahrzeug darstellt, die durch den Außenumgebungserkennungsabschnitt (13) erfasst wird; einer Feedback-Betätigungsvariablen ($FY_{FB}$) basierend auf einer Differenz zwischen einer Zielposition des Fahrzeugs, die sicherstellt, dass das Fahrzeug entlang der Zieltrajektorie fährt, und einer Vorschauposition des Fahrzeugs, die basierend auf den fahrumgebungsbezogenen Informationen bezüglich der Fahrumgebung vor dem Fahrzeug, die durch den Außenumgebungserkennungsabschnitt (13) erfasst werden, bestimmt wird; und einer Fahrzeugstabilisierungsmoment-Betätigungsvariablen (Mst) zum Aufbringen eines Moments auf das Fahrzeug basierend auf der Bremsbetätigung einer Bremsvorrichtung, die konfiguriert ist, um eine Bremskraft auf das Fahrzeug zu verwenden, wobei die Bremsvorrichtung zumindest teilweise den Aktuator bildet;

Abwärtskorrigieren der Fahrzeugstabilisierungsmoment-Betätigungsvariablen (Mst) gemäß dem Abfahrtsrisiko ($COR_L$, $COR_R$), wenn die Richtungen einer durch die Vorwärts-Betätigungsvariable ($FY_{FF}$) angeforderten Bewegung und einer durch die Fahrzeugstabilisierungsmoment-Betätigungsvariable (Mst) angeforderten Bewegung entgegengesetzt zu einer durch die Feedback-Betätigungsvariable ($FY_{FB}$) angeforderten Bewegungsrichtung sind, und ein Gesamtbetrag der durch die Vorwärts-Betätigungsvariable ($FY_{FF}$) und die Fahrzeugstabilisierungsmoment-Betätigungsvariable (Mst) angeforderten Bewegungen größer ist als ein Betrag der durch die Feedback-Betätigungsvariable ($FY_{FB}$) angeforderten Bewegung; und

Ausgeben der Aktuatorbetätigungsvariablenbezogenen Informationen an den Aktuator.

2. Fahrerassistenzsystem (200) gemäß Anspruch 1, wobei die Fahrerassistenzvorrichtung konfiguriert ist, um die Vorwärts-Betätigungsvariable ($FY_{FF}$) in Abhängigkeit vom Abfahrtsrisiko ($COR_L$, $COR_R$) abwärts zu korrigieren.

3. Fahrerassistenzsystem (200) gemäß Anspruch 1,
wobei das Abfahrtsrisiko ($COR_L$, $COR_R$) Informationen über eine Risikoverteilung innerhalb der befahrbaren Breite darstellt, die basierend auf Informationen über eine Kurve, auf der das Fahrzeug fährt, bestimmt wird, die zumindest teilweise die fahrumgebungsbezogenen Informationen bezüglich der Fahrumgebung vor dem Fahrzeug bilden, die durch den Außenumgebungserkennungsabschnitt (13) erfasst werden.

4. Fahrerassistenzsystem (200), das konfiguriert ist, zum:

Empfangen einer Zieltrajektorie eines Fahrzeugs, die basierend auf fahrumgebungsbezogenen Informationen bezüglich einer Fahrumgebung vor dem Fahrzeug festgestellt wurde, wobei die fahrumgebungsbezogenen Informationen durch einen Außenumgebungserkennungsabschnitt (13) erfasst wurden;

Feststellen, basierend auf den fahrumgebungsbezogenen Informationen, eines Abfahrtsrisikos ($COR_L$, $COR_R$) des Fahrzeugs, das von einer befahrbaren Breite einer Straße, auf der das Fahrzeug fährt, abweicht;

Bestimmen, als Aktuatorbetätigungsvariablenbezogene Informationen bezüglich einer Betätigungsvariablen eines Aktuators, die sich auf eine Lenk- und/oder Brems- /Fahrbetätigung bezieht, die bewirkt, dass das Fahrzeug entlang der Zieltrajektorie fährt, einer Vorwärts-Betätigungsvariablen ($FY_{FF}$) basierend auf einer Straßenkrümmung, wobei die Straßenkrümmung zumindest teilweise die fahrumgebungsbezogenen Informationen bezüglich der Fahrumgebung vor dem Fahrzeug bildet, die durch den Außenumgebungserkennungsabschnitt (13) erfasst wird; und einer Feedback-Betätigungsvariablen ($FY_{FB}$) basierend auf einer Differenz zwischen einer Zielposition des Fahrzeugs, die sicherstellt, dass das Fahrzeug entlang der Zieltrajektorie fährt, und einer Vorschauposition des Fahrzeugs, die basierend auf den fahrumgebungsbezogenen Informationen bezüglich der Fahrumgebung vor dem Fahrzeug bestimmt wird, die durch den Außenumgebungserkennungsabschnitt (13) erfasst werden;

Abwärtskorrigieren der Vorwärts-Betätigungsvariablen ($FY_{FF}$) gemäß dem Abfahrtsrisiko ($COR_L$, $COR_R$), wenn eine durch die Vorwärts-Betätigungsvariable ($FY_{FF}$) angeforderte Bewegungsrichtung entgegengesetzt zu einer durch die Feedback-Betätigungsvariable ($FY_{FB}$) angeforderten Bewegungsrichtung ist und ein Betrag der durch die Vorwärts-Betätigungsvariable ($FY_{FF}$) angeforderten Bewegung größer ist als ein Betrag der durch die Feedback-Betätigungsvariable ($FY_{FB}$) angeforderten Bewegung; und

Ausgeben der Aktuatorbetätigungsvariablenbezogenen Informationen an den Aktuator.

5. Fahrerassistenzsystem (200) gemäß Anspruch 4, wobei das Abfahrtsrisiko ($COR_L$, $COR_R$) Informationen über eine Risikoverteilung innerhalb der befahrbaren Breite darstellt, die basierend auf Informationen über eine Kurve, auf der das Fahrzeug fährt, bestimmt wird, die zumindest teilweise die fahrumgebungsbezogenen Informationen bezüglich der Fahrumgebung vor dem Fahrzeug bilden, die durch den Außenumgebungserkennungsabschnitt (13) erfasst werden.

6. Fahrerassistenzverfahren, umfassend:

Empfangen einer Zieltrajektorie eines Fahrzeugs, die basierend auf fahrumgebungsbezogenen Informationen bezüglich einer Fahrumgebung vor dem Fahrzeug berechnet wurde, wobei die fahrumgebungsbezogenen Informationen durch einen Außenumgebungserkennungsabschnitt (13) erfasst wurden;

Bestimmen, basierend auf den fahrumgebungsbezogenen Informationen, eines Abfahrtsrisikos des Fahrzeugs, das von einer befahrbaren Breite einer Straße, auf der das Fahrzeug fährt, abweicht;

Bestimmen, als Aktuatorbetätigungsvariablenbezogene Informationen bezüglich einer Betätigungsvariablen eines Aktuators, die sich auf eine Lenk- und/oder Brems- /Fahrbetätigung bezieht, die bewirkt, dass das Fahrzeug entlang der Zieltrajektorie fährt, einer Vorwärts-Betätigungsvariablen ($FY_{FF}$) basierend auf einer Straßenkrümmung, wobei die Straßenkrümmung zumindest teilweise die fahrumgebungsbezogenen Informationen bezüglich der Fahrumgebung vor dem Fahrzeug bildet, die durch den Außenumgebungserkennungsabschnitt (13) erfasst werden; einer Feedback-Betätigungsvariablen ($FY_{FB}$) basierend auf einer Differenz zwischen einer Zielposition des Fahrzeugs, die sicherstellt, dass das Fahrzeug entlang der Zieltrajektorie fährt, und einer Vorschauposition des Fahrzeugs, die basierend auf den fahrumgebungsbezogenen Informationen bezüglich der Fahrumgebung vor dem Fahrzeug bestimmt wird, die durch den Außenumgebungserkennungsabschnitt (13) erfasst werden; und einer Fahrzeugstabilisierungsmoment-Betätigungsvariablen (Mst) zum Anwenden eines Moments auf das Fahrzeug basierend auf der Bremsbetätigung einer Bremsvorrichtung, die konfiguriert ist, um eine Bremskraft auf das Fahrzeug anzuwenden, wobei die Bremsvorrichtung zumindest teilweise den Aktuator bildet;

Abwärtskorrigieren der Fahrzeugstabilisierungsmoment-Betätigungsvariablen (Mst) gemäß dem Abfahrtsrisiko ($COR_L$, $COR_R$), wenn die Richtungen einer durch die Vorwärts-Betätigungsvariable ($FY_{FF}$) angeforderten Bewegung und einer durch die Fahrzeugstabilisierungsmoment-Betätigungsvariable (Mst) angeforderten Bewegung entgegengesetzt zu einer durch die Feedback-Betätigungsvariable ($FY_{FB}$) angeforderten Bewegungsrichtung sind, und ein Gesamtbetrag der durch die Vorwärts-Betätigungsvariable ($FY_{FF}$) und die Fahrzeugstabilisierungsmoment-Betätigungsvariable (Mst) angeforderten Bewegungen größer ist als ein Betrag der durch die Feedback-Betätigungsvariable ($FY_{FB}$) angeforderten Bewegung; und

Ausgeben der Aktuatorbetätigungsvariablenbezogenen Informationen an den Aktuator.

**7.** Fahrerassistenzverfahren, umfassend:

Empfangen einer Zieltrajektorie eines Fahrzeugs, die basierend auf fahrumgebungsbezogenen Informationen bezüglich einer Fahrumgebung vor dem Fahrzeug bestimmt wurde, wobei die fahrumgebungsbezogenen Informationen durch einen Außenumgebungserkennungsabschnitt (13) erfasst wurden;

Bestimmen, basierend auf den fahrumgebungsbezogenen Informationen, eines Abfahrtsrisikos ($COR_L$, $COR_R$) des Fahrzeugs, das von einer befahrbaren Breite einer Straße, auf der das Fahrzeug fährt, abweicht;

Bestimmen, als Aktuatorbetätigungsvariablenbezogene Informationen bezüglich einer Betätigungsvariablen eines Aktuators, die sich auf eine Lenk- und/oder Brems- /Fahrbetätigung bezieht, die bewirkt, dass das Fahrzeug entlang der Zieltrajektorie fährt, einer Vorwärts-Betätigungsvariablen ($FY_{FF}$) basierend auf einer Straßenkrümmung, wobei die Straßenkrümmung zumindest teilweise die fahrumgebungsbezogenen Informationen bezüglich der Fahrumgebung vor dem Fahrzeug darstellt, die durch den Außenumgebungserkennungsabschnitt (13) erfasst werden; und einer Feedback-Betätigungsvariablen ($FY_{FB}$) basierend auf einer Differenz zwischen einer Zielposition des Fahrzeugs, die sicherstellt, dass das Fahrzeug entlang der Zieltrajektorie fährt, und einer Vorschauposition des Fahrzeugs, die basierend auf den fahrumgebungsbezogenen Informationen bezüglich der Fahrumgebung vor dem Fahrzeug bestimmt wird, die durch den Außenumgebungserkennungsabschnitt (13) erfasst werden;

Abwärtskorrigieren der Vorwärts-Betätigungsvariablen ($FY_{FF}$) gemäß dem Abfahrtsrisiko ($COR_L$, $COR_R$), wenn eine durch die Vorwärts-Betätigungsvariable ($FY_{FF}$) angeforderte Bewegungsrichtung entgegengesetzt zu einer durch die Feedback-Betätigungsvariable ($FY_{FB}$) angeforderten Bewegungsrichtung ist und ein Betrag der durch die Vorwärts-Betätigungsvariable ($FY_{FF}$) angeforderten Bewegung größer ist als ein Betrag der durch die Feedback-Betätigungsvariable ($FY_{FB}$) angeforderten Bewegung; und

Ausgeben der Aktuatorbetätigungsvariablenbezogenen Informationen an den Aktuator.

**Revendications**

**1.** Système d'aide à la conduite (200) configuré pour :

recevoir une trajectoire cible d'un véhicule déterminée sur la base d'informations liées à l'environnement de conduite relatives à un environnement de conduite devant le véhicule, les informations liées à l'environnement de conduite étant acquises par une partie de reconnaissance d'environnement externe (13) ;

déterminer, sur la base des informations liées à l'environnement de conduite, un risque de déviation ($COR_L$, $COR_R$) du véhicule s'écartant d'une largeur praticable d'une route sur laquelle se déplace le véhicule ;

déterminer, en tant qu'informations liées à une variable de fonctionnement d'actionneur relatives à une variable de fonctionnement d'un actionneur liée à une opération de direction et/ou de freinage de conduite qui amène le véhicule à se déplacer le long de la trajectoire cible, une variable de fonctionnement anticipatif ($FY_{FF}$) sur la base d'une courbure de route, la courbure de route constituant au moins partiellement les informations liées à l'environnement de conduite relatives à l'environnement de conduite devant le véhicule acquises par la partie de reconnaissance d'environnement externe (13) ; une variable de fonctionnement réactif ($FY_{FB}$) sur la base d'une différence entre une position cible du véhicule qui garantit que le véhicule se déplace le long de la trajectoire cible et une position de prévisualisation du véhicule déterminée sur la base des informations liées à l'environnement de conduite relatives à l'environnement de conduite devant le véhicule acquises par la partie de reconnaissance d'environnement externe (13); et une variable de fonctionnement de moment de stabilisation de véhicule (Mst) pour appliquer, au véhicule, un moment sur la base de l'opération de freinage d'un dispositif de freinage configuré pour appliquer une force de freinage au véhicule, le dispositif de freinage constituant au moins partiellement l'actionneur ;

corriger à la baisse la variable de fonctionnement de moment de stabilisation de véhicule (Mst) en fonction du risque de déviation ($COR_L$, $COR_R$), lorsque les directions de mouvement requis par la variable de fonctionnement anticipatif ($FY_{FF}$) et de mouvement requis par la variable de fonctionnement de moment de stabilisation de véhicule (Mst) sont opposées à une direction de mouvement requis par la variable de fonctionnement réactif ($FY_{FB}$), et qu'une quantité totale des mouvements requis par la variable de fonctionnement anticipatif ($FY_{FF}$) et la variable de fonctionnement de moment de stabilisation de véhicule (Mst) est supérieure à une quantité du mouvement requis par la variable de fonctionnement réactif ($FY_{FB}$) ; et
délivrer en sortie les informations liées à une variable de fonctionnement d'actionneur à l'actionneur.

**2.** Système d'aide à la conduite (200) selon la revendication 1, dans lequel le dispositif d'aide à la conduite est configuré pour corriger à la baisse la variable de fonctionnement anticipatif ($FY_{FF}$) en fonction du risque de déviation ($COR_L$, $COR_R$).

**3.** Système d'aide à la conduite (200) selon la revendication 1, dans lequel le risque de déviation ($COR_L$, $COR_R$) représente des informations sur une répartition de risque dans la largeur praticable déterminées sur la base d'informations sur une courbe sur laquelle se déplace le véhicule, qui constituent au moins partiellement les informations liées à l'environnement de conduite relatives à l'environnement de conduite devant le véhicule acquises par la partie de reconnaissance d'environnement externe (13).

**4.** Système d'aide à la conduite (200) configuré pour :

recevoir une trajectoire cible d'un véhicule déterminée sur la base d'informations liées à l'environnement de conduite relatives à un environnement de conduite devant le véhicule, les informations liées à l'environnement de conduite étant acquises par une partie de reconnaissance d'environnement externe (13) ;
déterminer, sur la base des informations liées à l'environnement de conduite, un risque de déviation ($COR_L$, $COR_R$) du véhicule s'écartant d'une largeur praticable d'une route sur laquelle se déplace le véhicule ;
en tant qu'informations liées à une variable de fonctionnement d'actionneur relatives à une variable de fonctionnement d'un actionneur liée à une opération de direction et/ou de freinage de conduite qui amène le véhicule à se déplacer le long de la trajectoire cible, une variable de fonctionnement anticipatif ($FY_{FF}$) sur la base d'une courbure de route, la courbure de route constituant au moins partiellement les informations liées à l'environnement de conduite relatives à l'environnement de conduite devant le véhicule acquises par la partie de reconnaissance d'environnement externe (13) ; une variable de fonctionnement réactif ($FY_{FB}$) sur la base d'une différence entre une position cible du véhicule qui garantit que le véhicule se déplace le long de la trajectoire cible et une position de prévisualisation du véhicule déterminée sur la base des informations liées à l'environnement de conduite relatives à l'environnement de conduite devant le véhicule acquises par la partie de reconnaissance d'environnement externe (13) ;
corriger à la baisse la variable de fonctionnement anticipatif ($FY_{FF}$) en fonction du risque de déviation ($COR_L$, $COR_R$), lorsqu'une direction de mouvement requis par la variable de fonctionnement anticipatif ($FY_{FF}$) est opposée à une direction de mouvement requis par la variable de fonctionnement réactif ($FY_{FB}$), et qu'une quantité du mouvement requis par la variable de fonctionnement anticipatif ($FY_{FF}$) est supérieure à une quantité du mouvement requis par la variable de fonctionnement réactif ($FY_{FB}$) ; et
délivrer en sortie les informations liées à une variable de fonctionnement d'actionneur à l'actionneur.

**5.** Système d'aide à la conduite (200) selon la revendication 4,
dans lequel le risque de déviation ($COR_L$, $COR_R$) représente des informations sur une répartition de risque dans la largeur praticable déterminées sur la base d'informations sur une courbe sur laquelle se déplace le véhicule, qui constituent au moins partiellement les informations liées à l'environnement de conduite relatives à l'environnement de conduite devant le véhicule acquises par la partie de reconnaissance d'environnement externe (13).

**6.** Procédé d'aide à la conduite comprenant :

la réception d'une trajectoire cible d'un véhicule calculée sur la base d'informations liées à l'environnement de conduite relatives à un environnement de conduite devant le véhicule, les informations liées à l'environnement de conduite étant acquises par une partie de reconnaissance d'environnement externe (13) ;
la détermination, sur la base des informations liées à l'environnement de conduite, d'un risque de déviation du véhicule s'écartant d'une largeur praticable d'une route sur laquelle se déplace le véhicule ;
la détermination, en tant qu'informations liées à la variable de fonctionnement d'actionneur relatives à une variable de fonctionnement d'un actionneur liée à une opération de direction et/ou de freinage/de conduite qui amène le véhicule à se déplacer le long de la trajectoire cible, d'une variable de fonctionnement anticipatif ($FY_{FF}$) sur la base d'une courbure de route, la courbure de route constituant au moins partiellement les informations liées à l'environnement de conduite relatives à l'environnement de conduite devant le véhicule acquises par la partie de reconnaissance d'environnement externe (13) ; d'une variable de fonctionnement réactif ($FY_{FB}$) sur la base d'une différence entre une position cible du véhicule qui garantit que le véhicule se déplace le long de la trajectoire cible et une position de prévisualisation du véhicule déterminée sur la base des informations liées à l'environnement de conduite relatives à l'environnement de conduite devant le véhicule acquises par la partie de reconnaissance d'environnement externe (13) ; et d'une variable de fonctionnement de moment de stabilisation de véhicule (Mst) pour appliquer, au véhicule, un moment sur la base de l'opération de freinage d'un dispositif de freinage configuré pour appliquer une force de freinage au véhicule, le dispositif de freinage constituant au moins partiellement l'actionneur ;

la correction à la baisse de la variable de fonctionnement de moment de stabilisation de véhicule (Mst) en fonction du risque de déviation ($COR_L$, $COR_R$), lorsque les directions de mouvement requis par la variable de fonctionnement anticipatif ($FY_{FF}$) et de mouvement requis par la variable de fonctionnement de moment de stabilisation de véhicule (Mst) sont opposées à une direction de mouvement requis par la variable de fonctionnement réactif ($FY_{FB}$), et qu'une quantité totale des mouvements requis par la variable de fonctionnement anticipatif ($FY_{FF}$) et la variable de fonctionnement de moment de stabilisation de véhicule (Mst) est supérieure à une quantité du mouvement requis par la variable de fonctionnement réactif ($FY_{FB}$) ; et

la livraison en sortie des informations liées à une variable de fonctionnement d'actionneur à l'actionneur.

7. Procédé d'aide à la conduite comprenant :

la réception d'une trajectoire cible d'un véhicule déterminée sur la base d'informations liées à l'environnement de conduite relatives à un environnement de conduite devant le véhicule, les informations liées à l'environnement de conduite étant acquises par une partie de reconnaissance d'environnement externe (13) ;

la détermination, sur la base des informations liées à l'environnement de conduite, d'un risque de déviation ($COR_L$, $COR_R$) du véhicule s'écartant d'une largeur praticable d'une route sur laquelle se déplace le véhicule ;

la détermination, en tant qu'informations liées à une variable de fonctionnement d'actionneur relatives à une variable de fonctionnement d'un actionneur liée à une opération de direction et/ou de freinage/de conduite qui amène le véhicule à se déplacer le long de la trajectoire cible, d'une variable de fonctionnement anticipatif ($FY_{FF}$) sur la base d'une courbure de route, la courbure de route constituant au moins partiellement les informations liées à l'environnement de conduite relatives à l'environnement de conduite devant le véhicule acquises par la partie de reconnaissance d'environnement externe (13) ; et d'une variable de fonctionnement réactif ($FY_{FB}$) sur la base d'une différence entre une position cible du véhicule qui garantit que le véhicule se déplace le long de la trajectoire cible et une position de prévisualisation du véhicule déterminée sur la base des informations liées à l'environnement de conduite relatives à l'environnement de conduite devant le véhicule acquises par la partie de reconnaissance d'environnement externe (13) ;

la correction à la baisse de la variable de fonctionnement anticipatif ($FY_{FF}$) en fonction du risque de déviation ($COR_L$, $COR_R$), lorsqu'une direction de mouvement requis par la variable de fonctionnement anticipatif ($FY_{FF}$) est opposée à une direction de mouvement requis par la variable de fonctionnement réactif ($FY_{FB}$), et qu'une quantité du mouvement requis par la variable de fonctionnement anticipatif ($FY_{FF}$) est supérieure à une quantité du mouvement requis par la variable de fonctionnement réactif ($FY_{FB}$) ; et

la livraison en sortie des informations liées à une variable de fonctionnement d'actionneur à l'actionneur.

# FIG.1

# FIG.2

EP 3 741 640 B1

# FIG.3

$$RISK = \frac{e^{u} - 1}{e^{a \cdot Lsl} - 1}$$

$$RISK = \frac{e^{(u - (Lsl + (1-a)Lsr))} - 1}{e^{a \cdot Lsr} - 1}$$

1.0

0

MRP

a · Lsl    (1−a) · Lsl    (1−a) · Lsr    a · Lsr    $u$

Lsl    Lsr

DRIVABLE WIDTH

LEFT ROAD EDGE    RIGHT ROAD EDGE

# FIG.4

```
                    ┌─────────────────────────────────────┐
                    │               START                 │
                    └─────────────────────────────────────┘
                                      │
                                      ▼
        S1001       ┌─────────────────────────────────────┐
                    │         CALCULATE (Xv, Yv)          │
                    └─────────────────────────────────────┘
                                      │
                                      ▼
        S1002       ┌─────────────────────────────────────┐
                    │         CALCULATE (Xs, Ys)          │
                    └─────────────────────────────────────┘
                                      │
                                      ▼
        S1003       ┌─────────────────────────────────────┐
                    │         CALCULATE (Xp, Yp)          │
                    └─────────────────────────────────────┘
                                      │
                                      ▼
        S1004       ┌─────────────────────────────────────┐
                    │     CALCULATE F/F OPERATION VARIABLE │
                    └─────────────────────────────────────┘
                                      │
                                      ▼
        S1005       ┌─────────────────────────────────────┐
                    │    CALCULATE F/B OPERATION VARIABLE  │
                    └─────────────────────────────────────┘
                                      │
                                      ▼
        S1006       ┌─────────────────────────────────────┐
                    │           CALCULATE FYv             │
                    └─────────────────────────────────────┘
                                      │
                                      ▼
        S1007       ┌─────────────────────────────────────┐
                    │           CALCULATE Mv              │
                    └─────────────────────────────────────┘
                                      │
                                      ▼
        S1008       ┌─────────────────────────────────────┐
                    │           CALCULATE FYf             │
                    └─────────────────────────────────────┘
                                      │
                                      ▼
        S1009       ┌─────────────────────────────────────┐
                    │           CALCULATE FYr             │
                    └─────────────────────────────────────┘
                                      │
                                      ▼
        S1010       ┌─────────────────────────────────────┐
                    │           CALCULATE δ               │
                    └─────────────────────────────────────┘
                                      │
                                      ▼
        S1011       ┌─────────────────────────────────────┐
                    │  CALCULATE FRONT WHEEL LATERAL FORCE │
                    └─────────────────────────────────────┘
                                      │
                                      ▼
        S1012       ┌─────────────────────────────────────┐
                    │  CALCULATE REAR WHEEL LATERAL FORCE  │
                    └─────────────────────────────────────┘
                                      │
                                      ▼
        S1013       ┌─────────────────────────────────────┐
                    │           CALCULATE MB              │
                    └─────────────────────────────────────┘
                                      │
                                      ▼
        S1014       ┌─────────────────────────────────────┐
                    │    CALCULATE HYDRAULIC PRESSURE      │
                    └─────────────────────────────────────┘
                                      │
                                      ▼
                    ┌─────────────────────────────────────┐
                    │                END                  │
                    └─────────────────────────────────────┘
```

# FIG.5

START

S711

$FY_f > 0$

No

Yes

S712

S713

$FY_{f\mu} = \min(\mu \cdot (W_{FL} + W_{FR}), FY_f)$

$FY_{f\mu} = \max(-\mu \cdot (W_{FL} + W_{FR}), FY_f)$

END

# FIG.6

```
                    ┌─────────────────┐
                    │      START      │
                    └─────────────────┘
                             │
                             ▼          S721
                         ◇─────────◇
                    ◇               ◇
               ◇      $FY_r > 0$         ◇──── No ──────────────┐
                    ◇               ◇                            │
                         ◇─────────◇                            │         S723
                          │                                     │
                         Yes                                    ▼
                          │        S722
                          ▼
         ┌────────────────────────────────────┐   ┌────────────────────────────────────┐
         │ $FY_{r\mu} = \min(\mu \cdot (W_{RL} + W_{RR}), FY_r)$ │   │ $FY_{r\mu} = \max(-\mu \cdot (W_{RL} + W_{RR}), FY_r)$ │
         └────────────────────────────────────┘   └────────────────────────────────────┘
                          │                                     │
                          ▼◄───────────────────────────────────┘
         ┌─────────────────┐
         │       END       │
         └─────────────────┘
```

# FIG.7

START

S801

$MB > 0$

No → (1)

Yes

S802

$M_B \geq \mu \cdot (W_{FR} + W_{RR}) \cdot \frac{Tr}{2}$

No

Yes

S804

$M_B \leq \mu \cdot W_{RR} \cdot \frac{Tr}{2}$

No

Yes

S803

(2)

$$Fx_{FL} = 0$$
$$Fx_{FR} = \mu \cdot W_{FR}$$
$$Fx_{RL} = 0$$
$$Fx_{RR} = \mu \cdot W_{RR}$$

S805

$$Fx_{FL} = 0$$
$$Fx_{FR} = 0$$
$$Fx_{RL} = 0$$
$$Fx_{RR} = \frac{2 \cdot M_B}{T_r}$$

S806

$$Fx_{FL} = 0$$
$$Fx_{FR} = \frac{2 \cdot M_B}{T_r} - \mu \cdot W_{RR}$$
$$Fx_{RL} = 0$$
$$Fx_{RR} = \mu \cdot W_{RR}$$

S812

$$P_{FL} = \frac{R}{KP_f} Fx_{FL}, \quad P_{FR} = \frac{R}{KP_f} Fx_{FR}, \quad P_{RL} = \frac{R}{KP_r} Fx_{RL}, \quad P_{RR} = \frac{R}{KP_r} Fx_{RR}$$

END

# FIG.8

① 1

S807

$$M_B \leq -\mu \cdot (W_{FL} + W_{RL}) \cdot \frac{Tr}{2}$$

No

Yes

S809

$$M_B \geq -\mu \cdot W_{RL} \cdot \frac{Tr}{2}$$

No

Yes

S808

$$Fx_{FL} = \mu \cdot W_{FL}$$
$$Fx_{FR} = 0$$
$$Fx_{RL} = \mu \cdot W_{RL}$$
$$Fx_{RR} = 0$$

S810

$$Fx_{FL} = 0$$
$$Fx_{FR} = 0$$
$$Fx_{RL} = \frac{-2 \cdot M_B}{T_r}$$
$$Fx_{RR} = 0$$

S811

$$Fx_{FL} = \frac{-2 \cdot M_B}{T_r} + \mu \cdot W_{RL}$$
$$Fx_{FR} = 0$$
$$Fx_{RL} = \mu \cdot W_{RL}$$
$$Fx_{RR} = 0$$

② 2

# FIG.9

| | F/F, F/B | Mst | δ |
|---|---|---|---|
| STANDARD VALUE | FF / FB | | |

COR_L : 0.0          COR_R :0.0

| | F/F , F/B | Mst | δ |
|---|---|---|---|
| STANDARD VALUE | FB / FF | | DEPARTURE |
| COLLECTED VALUE | FB / FF | | |

COR_L : 0.0          COR_R : 0.9          0.9

| | F/F , F/B | Mst | δ |
|---|---|---|---|
| STANDARD VALUE | FF / FB | N/A | DEPARTURE |
| COLLECTED VALUE | FF / FB | N/A | |

COR_L : 0.7          COR_R : 0.0          0.7

FIG.10

# FIG.11

# FIG.12

# FIG.13

# FIG.14

```
         START
           |
           v
     S821
   /OVERSTEER?\ ---No---> 
   \          /              |
        |                    v
       Yes              S823
        |            /UNDERSTEER?\ ---No---> 
        |            \           /              |
        |                 |                     v
        |                Yes                S825
   S822 |            S824 |                  Uns=0
        v                 v
CALCULATE Uns (FIG.15)  CALCULATE Uns (FIG.16)
        |                 |
        v                 |
       END
```

# FIG.15

CORRECTION TERM Uns
FOR OVERSTEER TENDENCY

LEFT TURN          RIGHT TURN

# FIG.16

CORRECTION TERM Uns
FOR UNDERSTEER TENDENCY

LEFT TURN    RIGHT TURN

# FIG.17

FIG.18

STEERING CONTROL — 501

HYDRAULIC PRESSURE CONTROL — 502

15

MB CALCULATION — 470

δ CALCULATION — 450

F/F CORRECTION — 430

F/B CORRECTION — 440

Mst CORRECTION — 460

F/F CALCULATION — 410

F/B CALCULATION — 420

RISK CALCULATION — 360

(Xp, Yp) CALCULATION — 350

(Xs, Ys) CALCULATION — 330

14

TARGET TRAJECTORY CALCULATION — 310

(Xv, Yv) CALCULATION — 320

ROAD EDGE INFORMATION CALCULATION — 340

Vc ACQUISITION — 212

EXTERNAL ENVIRONMENT RECOGNITION — 13

Mst CALCULATION — 221

**EP 3 741 640 B1**

**Patent documents cited in the description**

- JP 2006193156 A
- EP 1674359 A1
- EP 2338758 A1
- EP 3738850 A1